# EUROPÄISCHE PATENTSCHRIFT

(11) **EP 3 807 163 B1**
(45) Veröffentlichungstag und Bekanntmachung des Hinweises auf die Patenterteilung: **12.07.2023**
(21) Anmeldenummer: 19736310.4
(22) Anmeldetag: 18.06.2019
(51) Int. Cl.: B65D 50/04

(54) **VERFAHREN ZUR HERSTELLUNG EINES SICHERHEITSVERSCHLUSSES SOWIE SPRITZLING UND SICHERHEITSVERSCHLUSS**
PROCESS FOR MANUFACTURING A SAFETY CLOSURE, INJECTION MOULDED PART AND SAFETY CLOSURE
PROCÉDÉ POUR LA FABRICATION D'UNE FERMETURE DE SÉCURITÉ, PIÈCE MOULÉE PAR INJECTION AINSI QUE FERMETURE DE SÉCURITÉ

(30) Priorität: 18.06.2018 WO PCT/EP2018/066066
(43) Veröffentlichungstag der Anmeldung: 21.04.2021
(73) Patentinhaber: Capartis AG, 8200 Schaffhausen (CH)
(72) Erfinder: WOHLGENANNT, Herbert, 8200 Schaffhausen Schaffhausen (CH)
(74) Vertreter: Hepp Wenger Ryffel AG
(86) Internationale Anmeldenummer: PCT/EP2019/066082
(87) Internationale Veröffentlichungsnummer: WO 2019/243360

(56) Entgegenhaltungen:
- EP-A1- 1 803 656
- WO-A1-2017/143084
- CH-A5- 598 071
- US-A1- 2009 014 404

## Beschreibung

Die Erfindung betrifft ein Verfahren zur Herstellung eines Sicherheitsverschlusses für einen Behälter. Die Erfindung betrifft zudem einen Spritzling für einen Sicherheitsverschluss. Die Erfindung betrifft zudem einen Sicherheitsverschluss für einen Behälter.

### Stand der Technik

Es ist bekannt Drehverschlüsse von Flaschen oder Behältern mit einer Sicherung zu versehen, sodass der Drehverschluss von Kindern nicht oder nur mit grosser Schwierigkeit geöffnet werden kann. Solche Sicherheitsverschlüsse sind zum Beispiel geeignet zum Verschliessen von Behältern, die pharmazeutische Substanzen enthalten. Bekannte Sicherheitsverschlüsse weisen den Nachteil auf, dass deren Herstellung relativ teuer ist. Das Dokument EP1803656A1 offenbart einen Sicherheitsverschluss, dessen Herstellung in zwei Verfahrensschritten erfolgt, einem ersten Schritt, mit welchem ein Spritzling umfassend eine Verschlusskappe und ein Betätigungsteil erzeugt wird, wobei die Verschlusskappe und das Betätigungsteil miteinander verbunden sind, und einem zweiten Schritt, bei welchen die Verschlusskappe und das Betätigungsteil gegenseitig ineinander verschoben werden und dabei voneinander getrennt werden, sodass letztendlich ein Sicherheitsverschluss bestehend aus der Verschlusskappe und dem Betätigungsteil erzeugt wird. Dieser Sicherheitsverschluss weist die Nachteile auf, dass die Herstellung anspruchsvoll ist, dass das Betätigungsteil während dem Ineinanderschieben beschädigt werden kann, und dass das Öffnen des Sicherheitsverschlusses schwierig ist.

### Darstellung der Erfindung

Der Erfindung liegt die Aufgabe zugrunde einen kostengünstigeren, zuverlässigeren Sicherheitsverschluss zu schaffen. Diese Aufgabe wird gelöst mit einem Verfahren zum Herstellen eines Sicherheitsverschlusses umfassend die Merkmale von Anspruch 1. Die abhängigen Ansprüche 2 bis 4 betreffen weitere vorteilhafte Verfahrensschritte. Die Aufgabe wird weiter gelöst mit einem Spritzling für einen Sicherheitsverschluss umfassend die Merkmale von Anspruch 5. Die abhängigen Ansprüche 6 bis 13 betreffen weitere vorteilhafte ausgestaltete Spritzlinge. Die Aufgabe wird weiter gelöst mit einem Verfahren zum Herstellen eines Sicherheitsverschlusses aus einem Spritzling umfassend die Merkmale von Anspruch 14. Die Aufgabe wird weiter gelöst mit einem Sicherheitsverschluss umfassend die Merkmale von Anspruch 15. Die abhängigen Ansprüche 16 bis 26 betreffen weitere vorteilhafte ausgestaltete Sicherheitsverschlüsse.

Die Aufgabe wird insbesondere gelöst mit einem Verfahren zum Herstellen eines Sicherheitsverschlusses, indem in einem ersten Verfahrensschritt ein einteiliger Spritzling hergestellt wird, welcher, in Richtung einer Längsachse nacheinander folgend angeordnet, einen Drehverschluss mit einer Verschlusskappe, eine Mehrzahl von Trennstellen sowie ein Betätigungsteil umfasst, wobei der Drehverschluss über die Trennstellen mit dem Betätigungsteil verbunden ist, wobei die Verschlusskappe eine Aussenseite umfassend eine bezüglich der Längsachse in einer Umfangsrichtung verlaufende Aussenfläche mit Aussendurchmesser aufweist, und wobei die Verschlusskappe an der Aussenseite zudem ein erstes Eingriffsteil umfasst, wobei das Betätigungsteil eine Innenseite umfassend eine bezüglich der Längsachse in Umfangsrichtung verlaufende Innenfläche mit Innendurchmesser aufweist, wobei das Betätigungsteil an der Innenseite zudem ein zweites Eingriffsteil umfasst, wobei der Aussendurchmesser kleiner oder gleich dem Innendurchmesser ist, und wobei das erste und das zweite Eingriffsteil sich radial zur Längsachse teilweise überschneiden, und indem in einem zweiten Verfahrensschritt eine in Richtung der Längsachse einwirkende Kraft auf den Spritzling ausgeübt wird, sodass die Verschlusskappe und das Betätigungsteil gegenseitig in Richtung der Längsachse verschoben werden und die Verschlusskappe zumindest teilweise in das Betätigungsteil hinein verschoben wird, und dabei das erste Eingriffsteil in Richtung der Längsachse vollständig über das zweite Eingriffsteil geschoben wird, wobei das Betätigungsteil während dem Hineinschieben durch das erste Eingriffsteil elastisch und oval verformt wird, und nach erfolgtem Hineinschieben wieder die ursprüngliche Form annimmt.

Die Aufgabe wird weiter insbesondere gelöst mit einem Spritzling für einen Sicherheitsverschluss umfassend, in Richtung einer Längsachse nacheinander folgend angeordnet, einen Drehverschluss umfassend eine Verschlusskappe, eine Mehrzahl von Trennstellen sowie ein Betätigungsteil, wobei der Drehverschluss über die Trennstellen mit dem Betätigungsteil verbunden ist, wobei die Verschlusskappe eine Aussenseite umfassend eine bezüglich der Längsachse in einer Umfangsrichtung verlaufende Aussenfläche mit Aussendurchmesser aufweist, und wobei die Verschlusskappe an der Aussenseite zudem ein erstes Eingriffsteil umfasst, welches in zur Längsachse radialen Richtung über die Aussenfläche vorsteht, wobei das Betätigungsteil eine Innenseite umfassend eine bezüglich der Längsachse in Umfangsrichtung verlaufende Innenfläche mit Innendurchmesser aufweist, wobei das Betätigungsteil an der Innenseite zudem ein zweites Eingriffsteil umfasst, wobei der Aussendurchmesser kleiner oder gleich dem Innendurchmesser ist, und wobei das erste und das zweite Eingriffsteil sich radial zur Längsachse teilweise überschneiden, wobei das erste Eingriffsteil aus einer Mehrzahl von in Umfangsrichtung gegenseitig beabstandet angeordneten Eingriffsteilabschnitten mit zwischen liegenden Zwischenräumen besteht , wobei die Zwischenräume zwischen den Eingriffsteilabschnitten einen bezüglich den Eingriffsteilabschnitten reduzierten Aussendurchmesser aufweisen, und wobei das erste Eingriffsteil zumindest zwei erste und zwei zweite Eingriffsteilabschnitte umfasst, wobei die ersten und zweiten Eingriffsteilabschnitte in Umfangsrichtung unterschiedlich lang ausgestaltet sind.

Die Aufgabe wird weiter insbesondere gelöst mit einem Sicherheitsverschluss umfassend einen Drehverschluss mit einer Verschlusskappe aufweisend eine Längsachse sowie umfassend ein Betätigungsteil, wobei die Verschlusskappe eine Aussenseite umfassend eine bezüglich der Längsachse in einer Umfangsrichtung verlaufende Aussenfläche mit Aussendurchmesser aufweist, und wobei die Verschlusskappe an der Aussenseite zudem ein erstes Eingriffsteil umfasst, welches in zur Längsachse radialen Richtung über die Aussenfläche vorsteht, wobei das Betätigungsteil eine Innenseite umfassend eine bezüglich der Längsachse in Umfangsrichtung verlaufende Innenfläche mit Innendurchmesser aufweist, wobei das Betätigungsteil an der Innenseite zudem ein zweites Eingriffsteil umfasst, wobei der Aussendurchmesser kleiner oder gleich dem Innendurchmesser ist, wobei die Verschlusskappe und das Betätigungsteil konzentrisch bezüglich der Längsachse angeordnet sind, wobei die Verschlusskappe eine Stirnseite aufweist, und wobei das Betätigungsteil die Verschlusskappe entlang der Aussenflächen umschliesst unter Freihaltung der Stirnseite, und wobei das erste Eingriffsteil und das zweite Eingriffsteil sich radial zur Längsachse teilweise überschneiden, wobei das erste Eingriffsteil und das zweite Eingriffsteil in Richtung der Längsachse gegenüberliegend angeordnet sind und gegenseitig in Richtung der Längsachse verschiebbar sind, sodass das erste Eingriffsteil und das zweite Eingriffsteil in gegenseitigen Eingriff bringbar sind, wobei das erste Eingriffsteil aus einer Mehrzahl von in Umfangsrichtung gegenseitig beabstandet angeordneten Eingriffsteilabschnitten mit zwischen liegenden Zwischenräumen besteht , wobei die Zwischenräume zwischen den Eingriffsteilabschnitten einen bezüglich den Eingriffsteilabschnitten reduzierten Aussendurchmesser aufweisen, und wobei das erste Eingriffsteil zumindest zwei erste und zwei zweite Eingriffsteilabschnitte umfasst, wobei die ersten und zweiten Eingriffsteilabschnitte in Umfangsrichtung unterschiedlich lang ausgestaltet sind.

Der erfindungsgemässe Sicherheitsverschluss weist den Vorteil auf, dass dieser äusserst kostengünstig und zuverlässig herstellbar ist, indem in einem ersten Verfahrensschritt ein einteiliger Spritzling hergestellt wird, und indem in einem zweiten Verfahrensschritt eine in Längsrichtung wirkende Kraft auf den Spritzling ausgeübt wird, und durch das danach erfolgende Zusammenschieben des Spritzlings ein Sicherheitsverschluss umfassend einen Drehverschluss und ein Betätigungsteil entsteht. Bei bisher bekannten Sicherheitsverschlüssen, welche auf die vorhin genannte Weise hergestellt wurden, ergabt sich unter anderem das Problem, dass der Drehverschluss sowie das Betätigungsteil gegenseitig angepasst angeordnete Eingriffsteile aufwiesen, die jedoch nicht zuverlässig, und insbesondere nicht langfristig zuverlässig ineinander gegriffen haben, sodass der Sicherheitsverschluss z.B. nicht mehr geöffnet werden konnte. Um einen langfristig zuverlässigen Eingriff zu ermöglichen ist es erforderlich, dass sich die Stirnseiten der gegenseitig angeordneten Eingriffsteile in zur Längsachse radialer Richtung in einer gewissen Breite überschneiden, damit die Stirnseiten in dieser Breite unmittelbar gegenüberliegen und daher ineinander greifen können. Bei bisher bekannten Sicherheitsverschlüssen wird das Betätigungsteil während dem Zusammenschieben kreisförmig symmetrisch und zudem ausserordentlich stark gedehnt, sodass die Gefahr besteht, dass das Betätigungsteil während diesem Vorgang beschädigt oder geschwächt wird. Trotzdem ist die dadurch erzielte Eingriffsbreite der gegenüberliegenden Stirnseiten der Eingriffsteile beschränkt. Beim erfindungsgemässen Verfahren wird das Betätigungsteil während dem Zusammenschieben elastisch und zudem oval verformt, wobei das Betätigungsteil nach erfolgtem Hineinschieben wieder die ursprüngliche, vorzugsweise kreisrunde Form annimmt. Dieses Verfahren weist den Vorteil auf, dass die während dem Zusammenschieben auf das Betätigungsteil bewirkte Spannung geringer ist, und die Stirnseiten der gegenseitig angeordneten Eingriffsteile eine grössere Eingriffsbreite aufweisen können, und daher zuverlässiger und auch langfristig zuverlässig ineinandergreifen.

Das Betätigungsteil weist in Umfangsrichtung entlang der Innenfläche eine Innenumfangslänge auf. Besonders vorteilhaft wird das Betätigungsteil derart über den Drehverschluss geschoben, dass die Innenumfangslänge des Betätigungsteils auch während dem durch das erste Eingriffsteil verursachten ovalen Verformen beibehalten oder im Wesentlichen beibehalten wird, sodass das Betätigungsteil keine oder eine vernachlässigbar geringe Streckung in Umfangsrichtung erfährt, und dadurch keinen Schaden nimmt. Unter oval verformt wird verstanden, dass das Betätigungsteil während dem Zusammenschieben auf Grund des einwirkenden ersten Eingriffsteils zeitweise eine von der Kreisform abweichende Form annimmt, und somit zeitweise eine nicht kreisförmige Form annimmt, beispielsweise eine eiförmig, länglich runde oder ellipsenförmige Form aufweist. Da das erste Eingriffsteil vorteilhafterweise im Wesentlichen die Form bestimmt, welche das Betätigungsteil während dem Hinüberschieben über des erste Eingriffsteil einnimmt, folgt das Betätigungsteil während dem Verformen vorzugsweise im Wesentlichen der Aussenkontur des Eingriffsteils. Das Eingriffsteil könnte z.B. auch eine zumindest teilweise eckige Aussenkontur aufweisen, sodass die nicht kreisförmige Form, welche das Betätigungsteil zeitweise einnimmt, beispielsweise auch ein Polygonzug mit abgerundeten Ecken sein könnte. Das ovale Verformen des Betätigungsteils weist auch den Vorteil auf, dass das Betätigungsteil mit einer relativ dicken Wandstärke ausgestaltet werden kann, ohne dass dieses beim Zusammenschieben übermässig belastet oder beschädigt wird.

Vorzugsweise ist der Spritzling einstückig ausgestaltet. Es ist jedoch auch möglich den Drehverschluss sowie das Betätigungsteil getrennt herzustellen und danach den Sicherheitsverschluss herzustellen, indem das Betätigungsteil über den Drehverschluss geschoben wird.

Der erfindungsgemässe Sicherheitsverschluss ist einfach und sicher zu bedienen. Zudem kann der erfindungsgemässe Sicherheitsverschluss in einer Vielzahl von Möglichkeiten ausgestaltet werden. So kann zum Beispiel die Stirnseite der Verschlusskappe in einer Vielzahl von Möglichkeiten ausgestaltet sein, beispielsweise mit Aufdrucken, Prägungen oder dreidimensional vorstehenden Körpern, sodass der erfindungsgemässe Sicherheitsverschluss auch vorteilhafterweise für Werbezwecke geeignet ist. Der erfindungsgemässe Sicherheitsverschluss kann insbesondere auch mit einem Design versehen sein. Zudem kann auch die Aussenfläche des Betätigungsteils auf beliebige Weise gestaltet werden, und zum Beispiel nebst einer runden Form auch in einer dreieckigen, viereckigen oder vieleckigen Form oder in einer bauchigen Form ausgestaltet sein. Der erfindungsgemässe Sicherheitsverschluss ist somit in einer Vielzahl von Formen herstellbar.

Zudem kann die Verschlusskappe in einer weiteren möglichen Ausführungsform einen Durchgang aufweisen, um beispielsweise nachträglich noch eine Substanz in einen Behälter einzuführen, was insbesondere bei pharmazeutischen Produkten vorteilhaft sein kann, wenn kurz vor der Anwendung dem Behälter noch eine zusätzliche Substanz zuführbar ist.

In einer besonders vorteilhaften Ausgestaltung umfasst der erfindungsgemässe Sicherheitsverschluss eine Originalitätssicherung, um sicherzustellen, dass der Verschluss noch nie geöffnet wurde.

Die Erfindung wird nachfolgend an Hand von Ausführungsbeispielen beschrieben.

### Kurze Beschreibung der Zeichnungen

Die zur Erläuterung der Ausführungsbeispiele verwendeten Zeichnungen zeigen:
Fig. 1 eine perspektivische Ansicht eines Spritzlings eines Sicherheitsverschlusses;
Fig. 2 eine Seitenansicht des Spritzlings gemäss Fig. 1;
Fig. 3 eine Stirnansicht des Spritzlings gemäss Fig. 1;
Fig. 4 ein Detail des rechten Randes des Spritzlings gemäss Fig. 3;
Fig. 5 ein Detail des oberen Randes des Spritzlings gemäss Fig. 3;
Fig. 6 einen Längsschnitt des Spritzlings gemäss Fig. 1;
Fig. 7 eine Unteransicht des Spritzlings gemäss Fig. 6;
Fig. 8 einen Längsschnitt durch einen Drehverschluss;
Fig. 9 einen Längsschnitt durch ein Betätigungsteil;
Fig. 10 einen Längsschnitt durch einen Sicherheitsverschluss in einer ersten Stellung;
Fig. 11 einen Längsschnitt durch den Sicherheitsverschluss gemäss Fig. 10 in einer zweiten Stellung;
Fig. 12 einen Querschnitt durch den Sicherheitsverschluss gemäss Fig. 10 entlang der Schnittlinie A-A;
Fig. 13 eine Seitenansicht eines auf eine Flasche aufgesetzten Sicherheitsverschlusses;
Fig. 14 eine perspektivische Ansicht des Sicherheitsverschlusses gemäss Fig. 13;
Fig. 15 einen Längsschnitt durch ein weiteres Ausführungsbeispiel eines Sicherheitsverschlusses;
Fig. 16 einen Längsschnitt eines weiteren Ausführungsbeispiels eines Drehverschlusses;
Fig. 17 einen Längsschnitt eines zum Drehverschluss gemäss Figur 16 angepassten Betätigungsteils;
Fig. 18 einen Längsschnitt durch ein weiteres Ausführungsbeispiel eines Betätigungsteils;
Fig. 19 den Querschnitt gemäss Figur 12, wobei im Wesentlichen nur das erste Eingriffsteil dargestellt ist.

Grundsätzlich sind in den Zeichnungen gleiche Teile mit gleichen Bezugszeichen versehen.

### Wege zur Ausführung der Erfindung

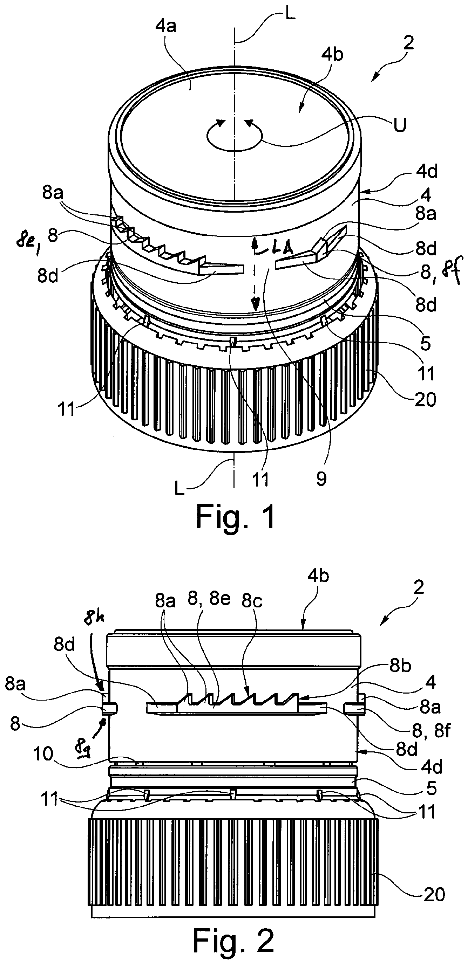

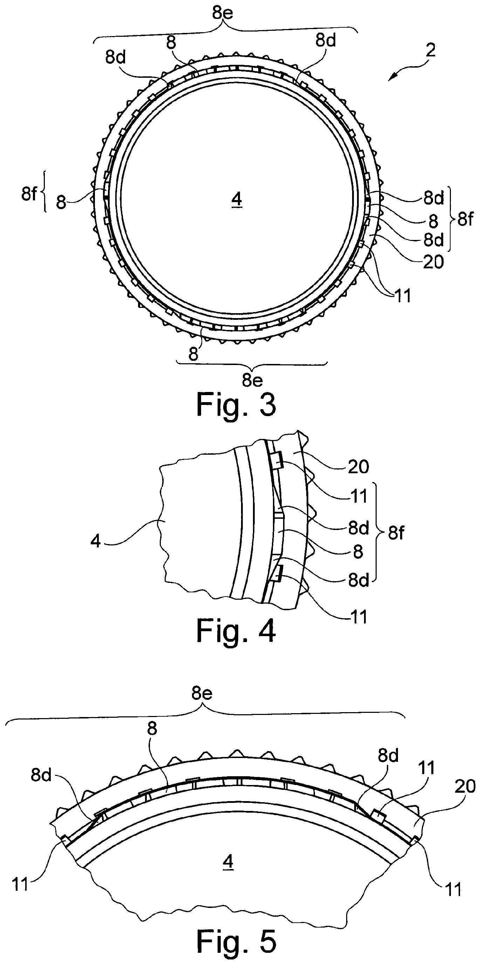

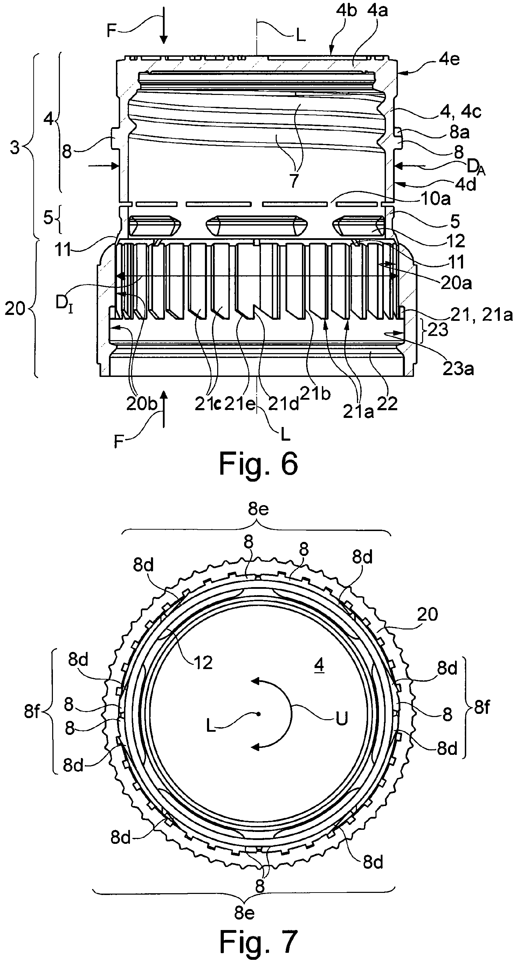

Die Figuren 1, 2, 3, 6 und 7 zeigen ein und denselben Spritzling 2 in unterschiedlichen Ansichten und die Figuren 4 und 5 zeigen Detailansichten dieses Spritzlings 2. Dieser einteilig ausgestaltete Spritzling 2 ist ein Halbfertigprodukt, mit dem ein Sicherheitsverschluss 1 herstellbar ist. Wie insbesondere aus Figur 6 ersichtlich, umfasst der Spritzling 2 in Richtung einer Längsachse L nacheinander folgend angeordnet einen Drehverschluss 3 umfassend eine Verschlusskappe 4, eine Mehrzahl von Trennstellen 11 sowie ein Betätigungsteil 20, wobei der Drehverschluss 3 über die Trennstellen 11 mit dem Betätigungsteil 20 verbunden ist. Die Verschlusskappe 4 ist zum Verschliessen einer Öffnung wie zum Beispiel eines Auslasses aufweisend z.B. ein Aussengewinde ausgestaltet, vorzugsweise zum Verschliessen eines Behälters oder einer Flasche. Im dargestellten Ausführungsbeispiel weist die Verschlusskappe 4 ein Innengewinde 7 auf. Die Verschlusskappe 4 könnte jedoch auch für andere Arten von Drehverschlüssen ausgestaltet sein, indem die Innenseite der Verschlusskappe 4 zum Beispiel Mittel für einen Bajonettverschluss aufweist.

Die Verschlusskappe 4 umfasst ein kreisförmiges Stirnteil 4a und ein im Wesentlichen hohlzylinderförmig verlaufendes Seitenteil 4c, an dessen Innenseite ein gegen innen vorstehendes Gewinde 7 angeformt ist.

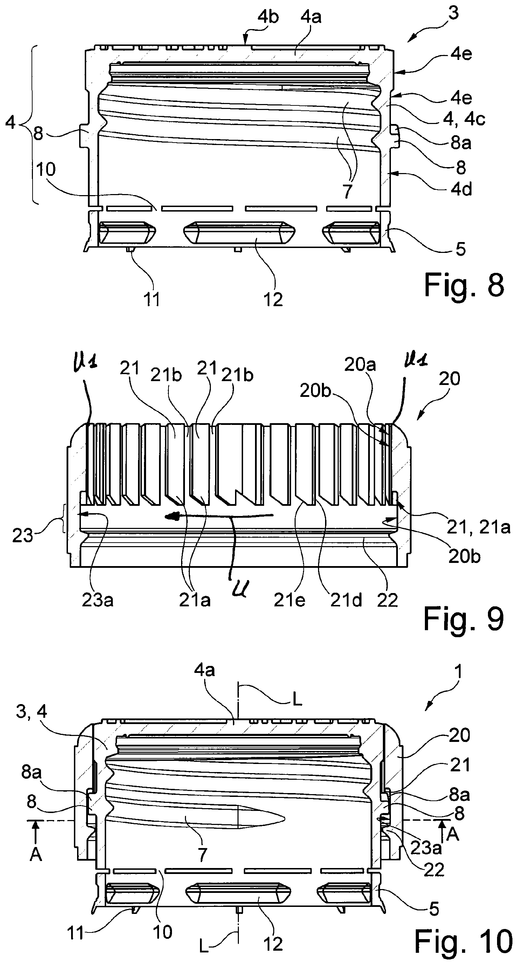

Die Verschlusskappe 4 weist eine Aussenseite 4e auf, umfassend eine bezüglich der Längsachse L in einer Umfangsrichtung U verlaufende Aussenfläche 4d mit Aussendurchmesser D_{A}. Die Verschlusskappe 4 umfasst an der Aussenseite 4e zudem ein erstes Eingriffsteil 8. Das Betätigungsteil 20 weist eine Innenseite 20b auf, umfassend eine bezüglich der Längsachse L in Umfangsrichtung U verlaufende Innenfläche 20a mit Innendurchmesser D_{I}. Das Betätigungsteil 20 umfasst an der Innenseite 20b zudem ein zweites Eingriffsteil 21. Der Aussendurchmesser D_{A} ist kleiner oder gleich dem Innendurchmesser D_{I}. Das erste und das zweite Eingriffsteil 8,21 überschneiden sich radial zur Längsachse L teilweise, das heisst, dass sich das erste Eingriffsteil 8 und das zweite Eingriffsteil 21 in Richtung der Längsachse L betrachtet teilweise überdecken, sodass es, wie zum Beispiel aus Figur 6 ersichtlich, erforderlich ist, die Innenseite 20b zumindest teilweise radial zur Längsachse L zu erweitern, um das erste Eingriffsteil 8 in Richtung der Längsachse L nach dem zweiten Eingriffsteil 21 anzuordnen, wie zum Beispiel in Figur 10 dargestellt.

Das Betätigungsteil 20 ist im dargestellten Ausführungsbeispiel gemäss einer der Figuren 1 bis 14 ringförmig ausgestaltet und umfasst eine bezüglich der Längsachse L in Umfangsrichtung U verlaufende, kreisförmige bzw. im Wesentlichen zylinderförmige Innenfläche 20a mit einem Innendurchmesser D_{I}. Im dargestellten Ausführungsbeispiel ist das erste Eingriffsteil 8 in radialer Richtung über die Aussenfläche 4d vorstehend ausgestaltet und weist nach oben vorstehende Zähne 8a auf. Das zweite Eingriffsteil 21 ist bezüglich der Innenfläche 20a in radialer Richtung zurückversetzt und weist eine nach unten ausgerichtete Stirnseite 21a mit Zähnen auf. Vorteilhafterweise umfasst die Innenseite 20b zudem ein bezüglich des zweiten Eingriffsteils 21 in Richtung der Längsachse L beabstandetes, zur Längsachse L hin vorstehendes Anschlagteil 22, sodass zwischen dem zweiten Eingriffsteil 21 und dem Anschlagteil 22 ein Halteabschnitt 23 mit Innenfläche 23a ausgebildet ist.

Wie insbesondere aus den Figuren 1 und 2 ersichtlich, besteht das erste Eingriffsteil 8 aus einer Mehrzahl von in Umfangsrichtung U gegenseitig beabstandet angeordneten Eingriffsteilabschnitten 8e, 8f, wobei die Zwischenräume 9 zwischen den Eingriffsteilabschnitten 8e, 8f den Aussendurchmesser D_{A} aufweisen. Die Zwischenräume 9 könnte zwischen den Eingriffsteilabschnitten 8e, 8f in Umfangsrichtung U auch leicht über die Aussenfläche 4d vorstehend ausgestaltet sein, derart, dass diese einen bezüglich den Eingriffsteilabschnitten 8e, 8f reduzierten Aussendurchmesser aufweisen. Oder anders ausgedrückt könnte das Eingriffsteil 8 in dieser Ausgestaltung auch als kontinuierlich und vollständig in Umfangsrichtung U verlaufend ausgestaltet bezeichnet werden, mit in radialer Richtung ausgeprägt vorstehenden Eingriffsteilabschnitten 8e, 8f und mit in radialer Richtung zurückversetzten Abschnitten, welche die Zwischenräume 9 ausbilden.

Vorteilhafterweise ist an der Aussenfläche 4d, wie in Figur 1 dargestellt, einzig das erste Eingriffsteil 8 in bezüglich der Längsachse L radialen Richtung vorstehend angeordnet. Die in Umfangsrichtung U gegenseitig beabstandet angeordneten Eingriffsteilabschnitte 8e, 8f bewirken, dass das Betätigungsteil 20 beim hinüberschieben über die Verschlusskappe 4 vorübergehend oval verformt wird. Die Länge sowie der gegenseitige Abstand der Eingriffsteilabschnitte 8e, 8f in Umfangsrichtung U bestimmt im Wesentlichen die Form der ovalen Verformung. Erfindungsgemäß sind der erste und der zweite Eingriffsteilabschnitt 8e, 8f in Umfangsrichtung U unterschiedlich lang ausgestaltet.

Vorteilhafterweise weisen der erste Eingriffsteilabschnitt 8e und/oder der zweite Eingriffsteilabschnitt 8f in Umfangsrichtung U beidseitig Endabschnitte 8d aufweisen, welche, wie in Figur 1 dargestellt, in die Aussenfläche 4d auslaufen.

Vorteilhafterweise weist die Aussenfläche 4d in Richtung der Längsachse L eine Gesamtlänge L_{A} auf, wobei die Aussenfläche 4d im Bereich der Zwischenräume 9 entlang der Gesamtlänge L_{A} denselben Aussendurchmesser D_{A} aufweist, sodass das Betätigungsteil 20 an dieser Stelle ungehindert entlang der Aussenfläche 4d verschoben werden kann.

Das erste Eingriffsteil 8 hat zwei unterschiedliche Aufgaben. Das erste Eingriffsteil 8 bewirkt einerseits die bereits beschriebene temporäre ovale Verformung des Betätigungsteils 20. Dazu ist insbesondere die Flanke 8g von Bedeutung, welche auf das Betätigungsteil 20 einwirkt. Das erste Eingriffsteil 8 bewirkt zudem durch deren auf der Oberseite 8h angeordneten Zähne 8a einen Eingriff in das zweite Eingriffsteil 21. Die Flanke 8a ist in Figur 2 als senkrecht zur Längsrichtung L verlaufend dargestellt. Diese Flanke 8a könnte jedoch beispielsweise auch schräg, rund oder halbkreisförmig verlaufend ausgestaltet sein, um beim Zusammenschieben von Betätigungsteil 20 und Drehverschluss 3 das Betätigungsteil 20 sanfter über das erste Eingriffsteil 8 gleiten zu lassen.

Wie insbesondere aus Figur 6 ersichtlich besteht das zweite Eingriffsteil 21 aus einer Mehrzahl von in Längsrichtung L verlaufenden Teilkörpern 21c, die in Umfangsrichtung U durch Zwischenräume 21b gegenseitig beabstandet sind, und die eine Stirnseite 21a mit Eingriffsflächen 21d, 21e ausbilden, welche in das erste Eingriffsteil 8 beziehungsweise dessen Zähne 8a eingreifen können. Die mit 21a, 21b, 21c, 21d und 21e bezeichneten Teile bilden Teilkomponenten des Eingriffsteils 21.

Im dargestellten Ausführungsbeispiel umfasst der Drehverschluss 3 die Verschlusskappe 4 sowie ein über eine Mehrzahl von Schwachstellen 10 mit der Verschlusskappe 4 verbundenes Originalitätssicherungsteil 5, auf Englisch als "Tamper-evident seal" bezeichnet. Das Originalitätssicherungsteil 5 weist an der Innenseite zudem zumindest eine gegen innen vorstehende Haltenocke 12 auf, die beispielsweise aus einem einzigen Teil bestehen kann, oder aus einer Mehrzahl von in Umfangsrichtung U gegenseitig beabstandeten Teilen. In einem weiteren Ausführungsbeispiel könnte der Drehverschluss 3 kein Originalitätssicherungsteil 5 aufweisen, sodass die Verschlusskappe 4 über die Trennstellen 11 direkt mit dem Betätigungsteil 20 verbunden ist.

Der Aussendurchmesser D_{A} der Aussenfläche 4d der Verschlusskappe 4 ist kleiner oder gleich dem Innendurchmesser D_{I} des Betätigungsteils 20, sodass die Verschlusskappe 4 durch ein Verschieben in Richtung der Längsachse L in das Betätigungsteil 20 hinein verschiebbar ist. Falls der Drehverschluss ein Originalitätssicherungsteil 5 umfasst, so muss diese Bedingung natürlich auch für den Aussendurchmesser D_{A} des Originalitätssicherungsteils 5 erfüllt sein. Das erste Eingriffsteil 8 der Verschlusskappe 4 und das zweite Eingriffsteil 21 des Betätigungsteils 20 sind derart gegenseitig angepasst ausgestaltet, beziehungsweise verlaufen derart in zur Längsachse L radialen Richtung, dass die beiden Eingriffsteile 8, 21 bei zusammengesetztem Sicherheitsverschluss 1 ineinander greifen und dabei die maximal mögliche Bewegung von Verschlusskappe 4 und Betätigungsteil 20 in einer Richtung der Längsachse L begrenzen.

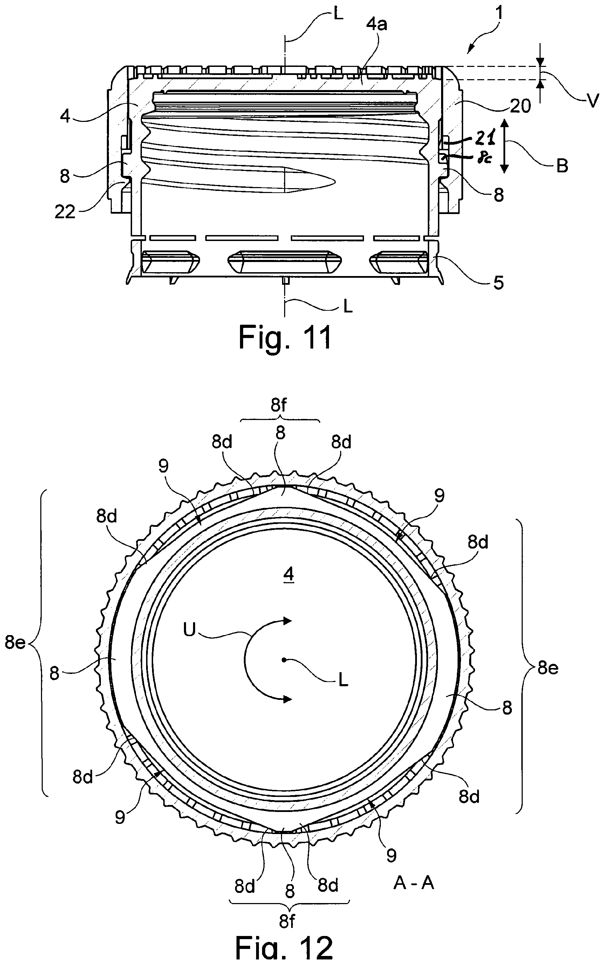

Der erfindungsgemässe Sicherheitsverschluss 1 wird hergestellt, indem in einem ersten Verfahrensschritt der einteilige Spritzling 2 erzeugt wird, vorzugsweise durch Spritzgiessen aus Kunststoff, und indem, wie in Figur 6 dargestellt, in einem zweiten Verfahrensschritt eine in Richtung der Längsachse L einwirkende Kraft F auf den Spritzling 2 ausgeübt wird, sodass der Drehverschluss 3 mit Verschlusskappe 4 und allenfalls vorhandener Originalitätssicherung 5 und das Betätigungsteil 20 gegenseitig in Richtung der Längsachse L verschoben werden, und der Drehverschluss 3, wie in den Figuren 10 und 11 dargestellt, zumindest teilweise in den Innenraum des Betätigungsteils 20 hinein verschoben wird, und das Betätigungsteil 20 durch das erste Eingriffsteil 8 oval verformt wird, bis das erste Eingriffsteil 8 in Richtung der Längsachse L vollständig über das zweite Eingriffsteil 21 geschoben wird, sodass das erste Eingriffsteil 8 und das zweite Eingriffsteil 21 beziehungsweise dessen Eingriffsflächen 8b, 8c, 21d, 21e danach in Richtung der Längsachse L gegenüberliegend angeordnet sind, und das Betätigungsteil 20 wieder seine ursprüngliche, vorzugsweise kreisförmig verlaufende Form annehmen kann.

Wie aus den Figuren 6, 10 und 11 ersichtlich bilden das zweite Eingriffsteil 21 und das Anschlagteil 22 einen Halteabschnitt 23 mit Innenfläche 23a, wobei das erste Eingriffsteil 8 in den Halteabschnitt 23 eingreift, und entlang des Halteabschnittes 23 in Richtung der Längsachse L verschiebbar ist. Die Länge des Halteabschnitts 23 bestimmt den maximal gegenseitig möglichen Verschiebeweg V von Drehverschluss 3 und Betätigungsteil 20 in Richtung der Längsachse L, wobei das erste Eingriffsteil 8 und das zweite Eingriffsteil 21, abhängig von der gegenseitigen Stellung von Verschlusskappe 4 und Betätigungsteil 20 in Richtung der Längsachse L, teilweise oder vollständig ineinander greifen, oder gegenseitig beabstandet sind und sich gegenseitig nicht berühren.

Das erste Eingriffsteil 8 und das zweite Eingriffsteil 21 weisen bei fertig ausgestaltetem Sicherheitsverschluss 1 gegenseitig ausgerichtete Eingriffsflächen 8b, 8c, 21d, 21e auf, wobei die Eingriffsflächen 8b, 8c, 21d, 21e derart ausgestaltet sind, beispielsweise wellenförmig oder zahnförmig, dass zum Öffnen der Verschlusskappe 4 eine in Längsrichtung L wirkende Kraft auf das Betätigungsteil 20 ausgeübt werden muss, um ein zum Öffnen genügend grosses, in Umfangsrichtung U wirkendes Drehmoment auf die Verschlusskappe 4 zu übertragen, sodass diese geöffnet wird. Besonders vorteilhaft sind das erste Eingriffsteil 8 und das zweite Eingriffsteil 21, wie in den Figuren 1, 2, 6 und 9 dargestellt, sägezahnförmig ausgestaltet, mit einer in Richtung der Längsachse L verlaufenden ersten Eingriffsfläche 8b, 21d und einer zweiten, quer zur Längsachse L verlaufenden Eingriffsfläche 8c, 21e. Die Sägezahnform ermöglicht ein besonders einfaches Verschliessen der Verschlusskappe 4, da keine in Längsrichtung L wirkende Kraft auf das Betätigungsteil 20 ausgeübt werden muss.

Abhängig von der gegenseitigen Ausgestaltung vom ersten Eingriffsteil 8 und vom zweiten Eingriffsteil 21 kann nun ein Drehen des Betätigungsteils 20 in die eine Drehrichtung ein Drehen der Verschlusskappe 3 zur Folge haben. Im dargestellten Ausführungsbeispiel gemäss der Figuren 1 bis 14 hat ein Drehen des Betätigungsteils 20 im Gegenuhrzeigersinn zur Folge, dass das Betätigungsteil 20 bezüglich der Verschlusskappe 4 angehoben wird, falls in Längsrichtung L keine Kraft auf das Betätigungsteil 20 ausgeübt wird. Falls während des Drehens eine Kraft in Längsrichtung L auf das Betätigungsteil 20 ausgeübt wird, so wird dadurch ein Drehmoment auf die Verschlusskappe 4 übertragen, und die Verschlusskappe 4 kann geöffnet werden. Beim Drehen des Betätigungsteils 20 im Uhrzeigersinn wird die Verschlusskappe 4 in Schliessrichtung gedreht, oder eine bereits verschlossene Verschlusskappe 4 noch stärker angezogen.

Wie aus den Figuren 10 und 11 ersichtlich, sind das erste Eingriffsteil 8 der Verschlusskappe 4 und das zweite Eingriffsteil 21 des Betätigungsteils 20 derart gegenseitig angepasst ausgestaltet, dass diese beim Sicherheitsverschluss 1 in einem gegenseitigen Eingriff sind oder durch ein gegenseitiges Verschieben in Bewegungsrichtung B in den gegenseitigen Eingriff gebracht werden können. Dieser gegenseitige Eingriff bewirkt, dass der Drehverschluss 3 und das Betätigungsteil 20 miteinander verbunden sind und gegenseitig maximal um den Verschiebeweg V in Richtung der Längsachse L beziehungsweise in Bewegungsrichtung B verschiebbar sind. Figur 11 zeigt in einem Längsschnitt den Sicherheitsverschluss 1 in einer ersten Extremstellung mit dem bezüglich der Verschlusskappe 4 in Bewegungsrichtung B maximal angehobenem Betätigungsteil 20. In dieser Stellung greifen das erste Eingriffsteil 8 und das zweite Eingriffsteil 21 nicht ineinander, sodass das Betätigungsteil 20 in beiden Richtungen in Umfangsrichtung U drehbar ist, ohne ein Drehmoment auf die Verschlusskappe 4 zu bewirken. Figur 10 zeigt in einem weiteren Längsschnitt den Sicherheitsverschluss 1 in einer zweiten Extremstellung mit dem bezüglich der Verschlusskappe 4 in Bewegungsrichtung B maximal abgesenkten Betätigungsteil 20, in welcher Stellung das erste Eingriffsteil 8 und das zweite Eingriffsteil 21 in vollständigem Eingriff sind. Das erste und das zweite Eingriffsteil 8,21 berühren sich, abhängig von der aktuellen Drehstellung, gegenseitig an deren gegenseitig ausgerichteten Eingriffsflächen 8b, 8c, 21d, 21e, wobei diese Eingriffsflächen radial zur Längsachse L ein Eingriffsbreite ausbilden, innerhalb welcher die gegenseitig ausgerichteten Eingriffsflächen 8b, 8c, 21d, 21e durch ein Verschieben in Längsrichtung L ineinander greifen können. Um ein zuverlässiges Eingreifen zu ermöglichen, und um zu gewährleisten, dass mit diesem Eingreifen ein genügend grosses Drehmoment vom Betätigungsteil auf dem Drehverschluss übertragen werden kann, ist vorteilhafterweise eine genügend grosse Eingriffsbreite erforderlich, welche beispielsweise vorteilhaft in einem Bereich von 0,5 bis 2 mm liegen kann. Vorteilhafterweise weist der Sicherheitsverschluss 1 mit zur Längsachse L konzentrisch angeordnetem Drehverschluss 3 und Betätigungsteil 20 über die gesamte Umfangsrichtung U eine identische Eingriffsbreite auf.

Figur 3 zeigt eine Stirnansicht des Spritzlings 2 und Figur 7 eine Unteransicht des Spritzlings 2, wobei insbesondere die Verschlusskappe 4 dargestellt ist sowie das erste Eingriffsteil 8 umfassend zwei erste Eingriffssteilabschnitte 8e und zwei zweite Eingriffsteilabschnitte 8f. Figur 4 zeigt den zweiten Eingriffsteilabschnitt 8f und Figur 5 den ersten Eingriffsteilabschnitt 8e der Figur 3 im Detail. Sowohl der erste Eingriffsteilabschnitt 8e als auch der zweite Eingriffsteilabschnitt 8f weisen in der Mitte eine maximale Höhe radial zur Längsachse L auf, und weisen in Umfangsrichtung U beidseitig Endabschnitte 8d auf, welche, wie aus den Figuren 1 und 2 ersichtlich, in die Aussenfläche 4d auslaufen, sodass in Umfangsrichtung U ein Zwischenraum 9 ausgebildet ist. Wie insbesondere aus den Figuren 4 und 5 ersichtlich überschneidet sich das erste Eingriffsteil 8 in zur Längsachse L radialer Richtung teilweise mit dem Betätigungsteil 20, sodass, wie aus Figur 7 ersichtlich, das erste Eingriffsteil 8 hinter dem Betätigungsteil 20 angeordnet ist, weshalb es beim Einführen des ersten Eingriffsteils 8 in das Betätigungsteil 20 erforderlich ist, den Innendurchmesser des Betätigungsteils 20 zu erweitern.

Im zweiten Verfahrensschritt zum Herstellen des Sicherheitsverschlusses 1 ist es erforderlich, eine in Richtung der Längsachse L einwirkende Kraft F auf den Spritzling 2 auszuüben, damit die Verschlusskappe 4 und das Betätigungsteil 20 gegenseitig in Richtung der Längsachse L verschoben werden, und dabei das erste Eingriffsteil 8 in Richtung der Längsachse L vollständig über das zweite Eingriffsteil 21 geschoben wird. Der fertig hergestellte Sicherheitsverschluss 1 ist in Figur 10 dargestellt, wobei Figur 12 einen Schnitt entlang der Schnittlinie A-A dargestellt. Das erste Eingriffsteil 8 ist nun im Eingriff mit dem Halteabschnitt 23. Der Verlauf des ersten Eingriffsteils 8 in Umfangsrichtung U, mit den radial vorstehenden ersten Eingriffsteilabschnitten 8e, dem zweiten Eingriffsteilabschnitt 8f und den Zwischenräumen 9 weist den Vorteil auf, dass das erste Eingriffsteil 8 beim Einführen in die Innenseite 20b des Betätigungsteils 20 die auftretende elastische, ovale Verformung des Betätigungsteils 20 bestimmt, indem die Innenseite 20b am ersten Eingriffsteil 8 anliegt. Während der elastischen, ovalen Verformung sind die Zwischenräume 9 besonders wichtig, weil diese bewirken, dass sich das Betätigungsteil 20 oval verformen kann, und dadurch die maximal im Betätigungsteil 20 auftretenden Spannungen vorhersehbar sind, wobei die Dimensionen von Betätigungsteil 20 und Verschlusskappe 4 und auch dessen Material vorzugsweise derart gewählt sind, dass während des Einführens der Verschlusskappe 4 in das Betätigungsteil 20 nur eine elastische Verformung auftritt, sodass das Betätigungsteil 20 und allenfalls auch die Verschlusskappe 4 nach erfolgtem Einführen wieder die ursprüngliche Form annehmen, wie dies in den Figuren 10 bis 12 dargestellt ist. Das erste Eingriffsteil 8 kann in einer Vielzahl von Kombinationen ausgestaltet sein, um diese Bedingung zu erfüllen. Insbesondere kann die Anzahl Zwischenräume 9 variiert werden, beispielsweise in einem Bereich zwischen 1 und 10, oder kann die Länge in Umfangsrichtung U vom ersten Eingriffsteilabschnitt 8e und/oder zweiten Eingriffsteilabschnitt 8f variiert werden, und/oder kann durch eine entsprechende Materialwahl die Elastizität von Verschlusskappe 4 und/oder Betätigungsteil 20 variiert werden, und/oder kann die Distanz der gegenseitigen Überschneidung von erstem und zweiten Eingriffsteil 8,21 radial zur Längsachse L variiert werden.

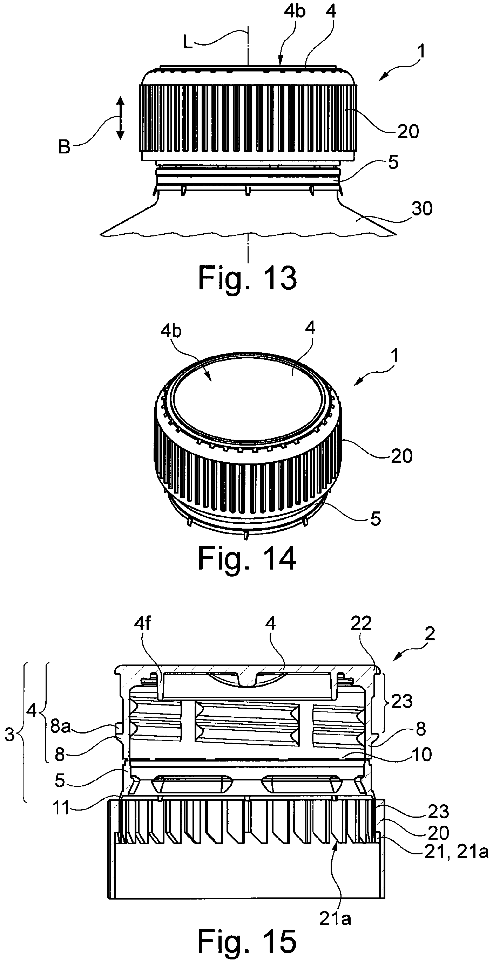

Die Figuren 13 und 14 zeigen den fertig hergestellten Sicherheitsverschluss 1, welcher in Figur 13 die Öffnung eines Behälters 30 verschliesst. Die Verschlusskappe 4 und das Betätigungsteil 20 sind konzentrisch bezüglich der Längsachse L angeordnet, wobei die Verschlusskappe 4 eine Stirnseite 4b aufweist, und wobei das Betätigungsteil 20 die Verschlusskappe 4 entlang der Aussenflächen 4d umschliesst unter Freihaltung der Stirnseite 4b. Da die Stirnseite 4b nicht vom Betätigungsteil 20 bedeckt ist sondern freigehalten ist, kann die Stirnseite 4b in einer Vielzahl von Möglichkeiten ausgestaltet sein. So kann die Stirnseite 4b beispielsweise einen Aufdruck aufweisen, oder wie in den Figuren 6 und 8 dargestellt, Vertiefungen aufweisen, welche zur graphischen Gestaltung genutzt werden können. Zudem kann die Stirnseite 4b einen dreidimensional vorstehenden Körper aufweisen, vorzugsweise einen Werbeträger wie beispielsweise eine Figur. Die Stirnseite 4b kann jedoch auch mit einem Auslass für Flüssigkeiten, beispielsweise einer Trinkhilfe, versehen sein, beispielsweise mit einem Röhrchen, sodass die Flüssigkeit über diesen Auslass dem Behälter entnommen werden kann. Dies ist zum Beispiel dann von Vorteil, wenn die Behälteröffnung im Originalzustand mit einer Schutzfolie verschlossen ist. Zum Öffnen des Behälters muss somit zuerst der Sicherheitsverschluss 1 geöffnet werden, danach muss die Schutzfolie von der Behälteröffnung abgezogen werden, und danach muss der Sicherheitsverschluss 1 wieder auf die Behälteröffnung aufgeschraubt werden, sodass danach die Flüssigkeit des Behälters über den Auslass in dem Sicherheitsverschluss 1 entnommen werden kann.

In den dargestellten Ausführungsbeispielen ist das Betätigungsteil 20 aussen rund dargestellt. Das Betätigungsteil 20 kann jedoch aussen jede beliebige Form annehmen, da für die Funktion des Sicherheitsverschlusses 1 nur die Form der Innenfläche 20a vorgegeben ist. Das Betätigungsteil 20 könnte aussen beispielsweise auch dreieckig, viereckig oder vieleckig oder oval ausgestaltet sein.

Figur 15 zeigt in einem Längsschnitt ein weiteres Ausführungsbeispiel eines Spritzlings 2 zur Herstellung eines Sicherheitsverschlusses 1. Dieser Spritzling 2 ist weitgehend identisch ausgestaltet wie der in den Figuren 1 bis 7 dargestellte Spritzling 2, mit Ausnahme, dass das Anschlagteil 22 an der Verschlusskappe 4 angeordnet ist und dort den Halteabschnitt 23 begrenzt, und dass die Verschlusskappe eine Innenlippe 4f aufweist.

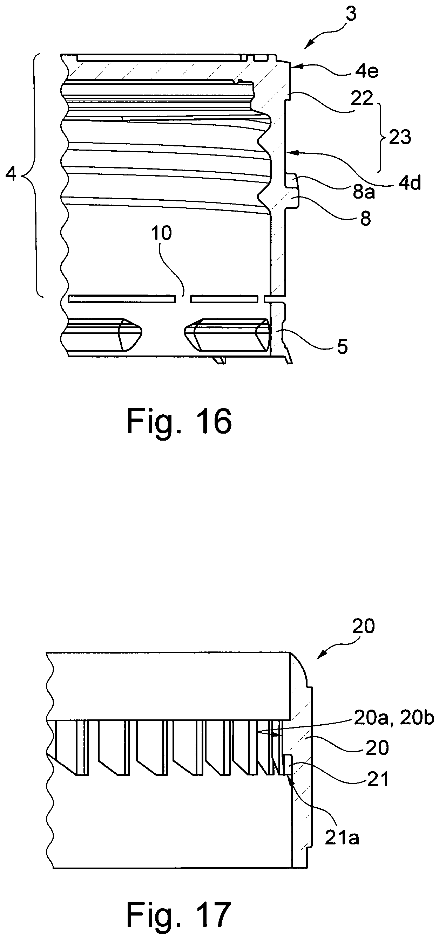

Figur 16 zeigt in einem nur teilweise dargestellten Längsschnitt ein weiteres Ausführungsbeispiel eines Drehverschlusses 3 umfassend eine Verschlusskappe 4 sowie eine über Schwachstellen 10 verbundene Originalitätssicherung 5. Die Verschlusskappe 4 umfasst eine Aussenseite 4e, welche ein Anschlagteil 22 sowie ein erstes Eingriffsteil 8 umfasst. Das Anschlagteil 22 sowie das Eingriffsteil 8 sind in Richtung der Längsachse L um die Länge eines Halteabschnittes 23 beabstandet. Das Eingriffsteil 8 weist eine Mehrzahl von nach oben ausgerichteten und in Umfangsrichtung U gegenseitig beabstandeten Zähnen 8a auf. Die Verschlusskappe 4 umfasst zudem eine Aussenfläche 4d mit einem Aussendurchmesser D_{A}. Figur 17 zeigt ein zum Drehverschluss 3 gemäss Figur 16 angepasst ausgestaltetes Betätigungsteil 20. Das Betätigungsteil 20 umfasst eine Innenfläche 20a, eine Innenseite 20b sowie ein gegen innen vorstehendes zweites Eingriffsteil 21 mit einer Mehrzahl von nach unten ausgerichteten und in Umfangsrichtung U gegenseitig beabstandeten Zähnen 21a. Beim Herstellen des Sicherheitsverschlusses wird der Drehverschluss 3 in das Betätigungsteil 20 eingeführt, sodass, in der dargestellten Ansicht, das erste Eingriffsteil 8 in Richtung der Längsachse L vollständig über das zweite Eingriffsteil 21 geschoben wird, sodass das zweite Eingriffsteil 21 im Haltebeschnitt 23 angeordnet ist, und die Bewegung des zweiten Eingriffsteils 21 in Richtung der Längsachse L durch das Anschlagteil 22 sowie das erste Eingriffsteil 8 der Verschlusskappe 4 begrenzt ist.

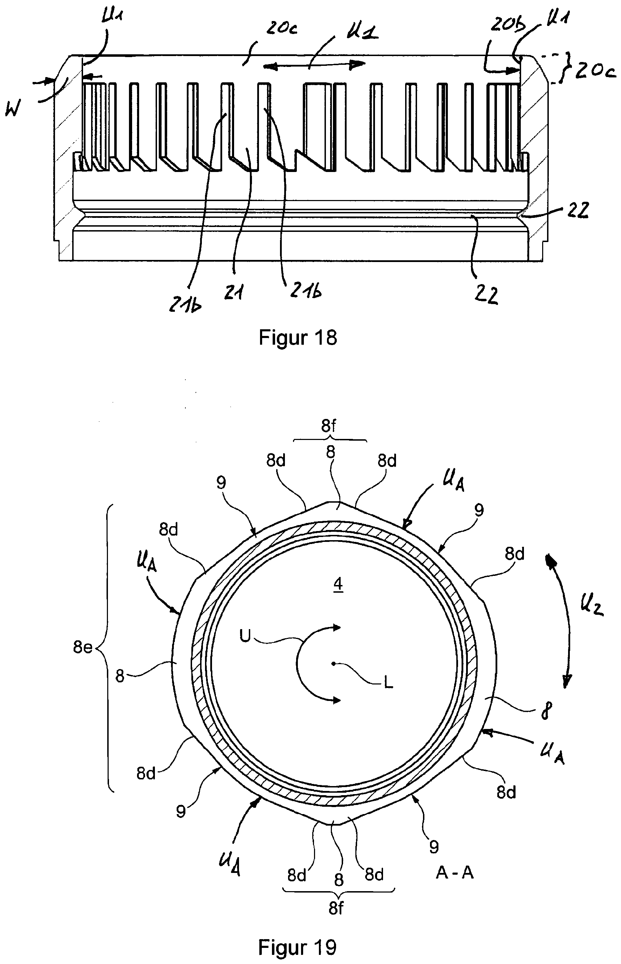

Wie in den Figuren 9 und 18 dargestellt weist das Betätigungsteil 20 in Umfangsrichtung U entlang der Innenfläche 20a eine gesamten Innenumfangslänge U₁ aufweist, und weist das erste Eingriffsteil 8 zusammen mit den Zwischenräumen 9, wie in Figur 19 dargestellt, in Umfangsrichtung U eine gesamte Aussenumfangslänge U₂ auf, wobei die Innenumfangslänge U₁ grösser oder gleich der Aussenumfangslänge U₂ ist, sodass bei Zusammenführen von Verschlusskappe 4 und Betätigungsteil 20 die Innenseite 20b in Umfangsrichtung U keine Streckung erfährt. Figur 19 zeigt die Aussenfläche U_{A}, welche entlang des ersten Eingriffsteils 8 und der Zwischenräume 9 verlaufend, gesamte Aussenumfangslänge U₂ definiert.

Figur 18 zeigt einen Längsschnitt durch ein weiteres Ausführungsbeispiel eines Betätigungsteils 20, welche in Verlaufsrichtung der Längsachse L zuerst einen Eingangsabschnitt 20c aufweist, der in Umfangsrichtung durchgehend ringförmig und frei von Zwischenräumen 21b ausgestaltet ist, wobei das Betätigungsteil 20 radial zur Längsachse L eine Wandstärke W aufweist, wobei das Betätigungsteil 20 in Richtung der Längsachse L im Bereich vor oder nach dem Anschlagteil 22 eine geringere, vorzugsweise eine geringere maximale Wandstärke W aufweist als der Eingangsabschnitt 20c. Ein derartig ausgestaltetes Betätigungsteil 20 ist besonders formstabil, da der Eingangsabschnitt 20c ein derart dicke Wandstärke W aufweist, dass das Betätigungsteil 20 formstabiler ist.

## Patentansprüche

1. Verfahren zum Herstellen eines Sicherheitsverschlusses (1), indem in einem ersten Verfahrensschritt ein einteiliger Spritzling (2) hergestellt wird, welcher, in Richtung einer Längsachse (L) nacheinander folgend angeordnet, einen Drehverschluss (3) mit einer Verschlusskappe (4), eine Mehrzahl von Trennstellen (11) sowie ein Betätigungsteil (20) umfasst, wobei der Drehverschluss (3) über die Trennstellen (11) mit dem Betätigungsteil (20) verbunden ist, wobei die Verschlusskappe (4) eine Aussenseite (4e) umfassend eine bezüglich der Längsachse (L) in einer Umfangsrichtung (U) verlaufende Aussenfläche (4d) mit Aussendurchmesser (D_{A}) aufweist, und wobei die Verschlusskappe (4) an der Aussenseite (4e) zudem ein erstes Eingriffsteil (8) umfasst, wobei das Betätigungsteil (20) eine Innenseite (20b) umfassend eine bezüglich der Längsachse (L) in Umfangsrichtung (U) verlaufende Innenfläche (20a) mit Innendurchmesser (D_{I}) aufweist, wobei das Betätigungsteil (20) an der Innenseite (20b) zudem ein zweites Eingriffsteil (21) umfasst, wobei der Aussendurchmesser (D_{A}) kleiner oder gleich dem Innendurchmesser (D_{I}) ist, und wobei das erste und das zweite Eingriffsteil (8,21) sich radial zur Längsachse (L) teilweise überschneiden,
und indem in einem zweiten Verfahrensschritt eine in Richtung der Längsachse (L) einwirkende Kraft (F) auf den Spritzling (2) ausgeübt wird, sodass die Verschlusskappe (4) und das Betätigungsteil (20) gegenseitig in Richtung der Längsachse (L) verschoben werden und die Verschlusskappe (4) zumindest teilweise in das Betätigungsteil (20) hinein verschoben wird, und dabei das erste Eingriffsteil (8) in Richtung der Längsachse (L) vollständig über das zweite Eingriffsteil (21) geschoben wird,
**dadurch gekennzeichnet, dass**
das Betätigungsteil (20) während dem Hineinschieben durch das erste Eingriffsteil (8) elastisch und oval verformt wird, und nach erfolgtem Hineinschieben wieder die ursprüngliche Form annimmt.

2. Verfahren nach Anspruch 1 , **dadurch gekennzeichnet, dass** das erste Eingriffsteil (8) in Umfangsrichtung (U) verläuft und über die Aussenfläche (4d) vorsteht, dass das zweite Eingriffsteil (21) in Umfangsrichtung (U) verläuft und bezüglich der Innenfläche (20a) in radialer Richtung zurückversetzt ist, dass beim Hineinschieben der Verschlusskappe (4) in das Betätigungsteil (20) das erste Eingriffsteil (8) an der Innenfläche (20a) des Betätigungsteils (20) anliegt und das Betätigungsteil (20) durch das einwirkende erste Eingriffsteil (8) elastisch verformt wird, bis das erste Eingriffsteil (8) in Richtung der Längsachse (L) vollständig über das zweite Eingriffsteil (21) geschoben ist.

3. Verfahren nach Anspruch 1 oder 2, **dadurch gekennzeichnet, dass** das erste Eingriffsteil (8) aus einer Mehrzahl von in Umfangsrichtung (U) gegenseitig beabstandet angeordneten Eingriffsteilabschnitten (8e, 8f) besteht, dass beim Hineinschieben der Verschlusskappe (4) in das Betätigungsteil (20) die ursprünglich kreisförmig verlaufende Innenfläche (20a) des Betätigungsteils (20) durch die über die Aussenfläche (4d) vorstehenden Eingriffsteilabschnitte (8e, 8f) elastisch verformt wird, und dass, nach dem das erste Eingriffsteil (8) in Richtung der Längsachse (L) vollständig über das zweite Eingriffsteil (21) geschoben ist, die Innenfläche (20a) selbsttätig wieder in die kreisförmig verlaufende Innenfläche (20a) zurückverformt wird.

4. Verfahren nach einem der vorhergehenden Ansprüche, **dadurch gekennzeichnet, dass** das Betätigungsteil (20) in Umfangsrichtung (U) entlang der Innenfläche (20a) eine Innenumfangslänge (U₁) aufweist, und dass diese Innenumfangslänge (U₁) auch während dem ovalen Verformen beibehalten oder im Wesentlichen beibehalten wird.

5. Spritzling (2) für einen Sicherheitsverschluss (1) umfassend, in Richtung einer Längsachse (L) nacheinander folgend angeordnet, einen Drehverschluss (3) umfassend eine Verschlusskappe (4), eine Mehrzahl von Trennstellen (11) sowie ein Betätigungsteil (20), wobei der Drehverschluss (3) über die Trennstellen (11) mit dem Betätigungsteil (20) verbunden ist, wobei die Verschlusskappe (4) eine Aussenseite (4e) umfassend eine bezüglich der Längsachse (L) in einer Umfangsrichtung (U) verlaufende Aussenfläche (4d) mit Aussendurchmesser (D_{A}) aufweist, und wobei die Verschlusskappe (4) an der Aussenseite (4e) zudem ein erstes Eingriffsteil (8) umfasst, welches in zur Längsachse (L) radialen Richtung (R) über die Aussenfläche (4d) vorsteht, wobei das Betätigungsteil (20) eine Innenseite (20b) umfassend eine bezüglich der Längsachse (L) in Umfangsrichtung (U) verlaufende Innenfläche (20a) mit Innendurchmesser (D_{I}) aufweist, wobei das Betätigungsteil (20) an der Innenseite (20b) zudem ein zweites Eingriffsteil (21) umfasst, wobei der Aussendurchmesser (D_{A}) kleiner oder gleich dem Innendurchmesser (D_{I}) ist, und wobei das erste und das zweite Eingriffsteil (8, 21) sich radial zur Längsachse (L) teilweise überschneiden, wobei das erste Eingriffsteil (8) aus einer Mehrzahl von in Umfangsrichtung (U) gegenseitig beabstandet angeordneten Eingriffsteilabschnitten (8e, 8f) mit zwischen liegenden Zwischenräumen (9) besteht, wobei die Zwischenräume (9) zwischen den Eingriffsteilabschnitten (8e, 8f) einen bezüglich den Eingriffsteilabschnitten (8e, 8f) reduzierten Aussendurchmesser aufweisen, und wobei das erste Eingriffsteil (8) zumindest zwei erste und zwei zweite Eingriffsteilabschnitte (8e, 8f) umfasst, **dadurch gekennzeichnet, dass** die ersten und zweiten Eingriffsteilabschnitte (8e, 8f) in Umfangsrichtung (U) unterschiedlich lang ausgestaltet sind.

6. Spritzling nach Anspruch 5, **dadurch gekennzeichnet, dass** die Zwischenräume (9) den Aussendurchmesser (D_{A}) der Aussenfläche (4d) aufweisen.

7. Spritzling nach Anspruch 5 oder 6, **dadurch gekennzeichnet, dass** an der Aussenfläche (4d) einzig das erste Eingriffsteil (8) angeordnet ist.

8. Spritzling nach Anspruch 7, **dadurch gekennzeichnet, dass** die Aussenfläche (4d) in Richtung der Längsachse (L) eine Gesamtlänge (LA) aufweist, und dass die Aussenfläche (4d) im Bereich der Zwischenräume (9) entlang der Gesamtlänge (LA) denselben Aussendurchmesser (D_{A}) aufweist.

9. Spritzling nach Anspruch 5, **dadurch gekennzeichnet, dass** der erste Eingriffsteilabschnitt (8e) sowie der zweite Eingriffsteilabschnitt (8f) in Umfangsrichtung (U) beidseitig Endabschnitte (8d) aufweisen, welche in die Aussenfläche (4d) auslaufen.

10. Spritzling nach Anspruch 5, **dadurch gekennzeichnet, dass** das zweite Eingriffsteil (21) bezüglich der Innenfläche (20a) in radialer Richtung zurückversetzt ist, und dass die Innenseite (20b) ein bezüglich dem zweiten Eingriffsteil (21) in Richtung der Längsachse (L) beabstandetes, zur Längsachse (L) hin vorstehendes Anschlagteil (22) umfasst, sodass zwischen dem zweiten Eingriffsteil (21) und dem Anschlagteil (22) ein Halteabschnitt (23) ausgebildet ist.

11. Spritzling nach einem der Ansprüche 5 bis 10 , **dadurch gekennzeichnet, dass** das Betätigungsteil (20) in Umfangsrichtung (U) entlang der Innenfläche (20a) eine Innenumfangslänge (U₁) aufweist, dass das erste Eingriffsteil (8) zusammen mit den Zwischenräumen (9) in Umfangsrichtung (U) eine Aussenumfangslänge (U₂) aufweist, und dass die Innenumfangslänge (U₁) grösser oder gleich der Aussenumfangslänge (U₂) ist.

12. Spritzling nach einem der Ansprüche 5 bis 11, **dadurch gekennzeichnet, dass** der Drehverschluss (3) ein Qualitätssicherungsteil (5) umfasst, dass das Qualitätssicherungsteil (5) in Richtung der Längsachse (L) nachfolgend der Verschlusskappe (4) angeordnet ist und über Schwachstellen (10) mit der Verschlusskappe (4) verbunden ist.

13. Spritzling nach einem der Ansprüche 10 bis 12, **dadurch gekennzeichnet, dass** das Betätigungsteil (20) in Verlaufsrichtung der Längsachse (L) zuerst einen Eingangsabschnitt (20c) aufweist, der durchgehend ringförmig und frei von Zwischenräumen (21b) ausgestaltet ist, und dass das Betätigungsteil (20) radial zur Längsachse (L) eine Wandstärke (W) aufweist, wobei das Betätigungsteil (20) in Richtung der Längsachse (L) im Bereich vor oder nach dem Anschlagteil (22) eine geringere Wandstärke (W) aufweist als der Eingangsabschnitt (20c) .

14. Verfahren zum Herstellen eines Sicherheitsverschlusses (1) aus einem Spritzling (2) nach einem der Ansprüche 5 bis 13, indem eine in Richtung der Längsachse (L) einwirkende Kraft (F) auf den Spritzling (2) ausgeübt wird, sodass die Verschlusskappe (4) und das Betätigungsteil (20) gegenseitig in Richtung der Längsachse (L) verschoben werden und die Verschlusskappe (4) zumindest teilweise in das Betätigungsteil (20) hinein verschoben wird, indem das Betätigungsteil (20) während dem Hineinschieben durch das erste Eingriffsteil (8) elastisch und oval verformt wird, und dabei das erste Eingriffsteil (8) in Richtung der Längsachse (L) vollständig über das zweite Eingriffsteil (21) geschoben wird, und indem das Betätigungsteil (20) nach erfolgtem Hineinschieben wieder die ursprüngliche Form annimmt, sodass das erste Eingriffsteil (8) und das zweite Eingriffsteil (21) danach in Richtung der Längsachse (L) gegenüberliegend angeordnet sind.

15. Sicherheitsverschluss (1) umfassend einen Drehverschluss (3) mit einer Verschlusskappe (4) aufweisend eine Längsachse (L), sowie umfassend ein Betätigungsteil (20), wobei die Verschlusskappe (4) eine Aussenseite (4e) umfassend eine bezüglich der Längsachse (L) in einer Umfangsrichtung (U) verlaufende Aussenfläche (4d) mit Aussendurchmesser (D_{A}) aufweist, und wobei die Verschlusskappe (4) an der Aussenseite (4e) zudem ein erstes Eingriffsteil (8) umfasst, welches in zur Längsachse (L) radialen Richtung (R) über die Aussenfläche (4d) vorsteht, wobei das Betätigungsteil (20) eine Innenseite (20b) umfassend eine bezüglich der Längsachse (L) in Umfangsrichtung (U) verlaufende Innenfläche (20a) mit Innendurchmesser (D_{I}) aufweist, wobei das Betätigungsteil (20) an der Innenseite (20b) zudem ein zweites Eingriffsteil (21) umfasst, wobei der Aussendurchmesser (D_{A}) kleiner oder gleich dem Innendurchmesser (D_{I}) ist, wobei die Verschlusskappe (4) und das Betätigungsteil (20) konzentrisch bezüglich der Längsachse (L) angeordnet sind, wobei die Verschlusskappe (4) eine Stirnseite (4b) aufweist, und wobei das Betätigungsteil (20) die Verschlusskappe (4) entlang der Aussenflächen (4d) umschliesst unter Freihaltung der Stirnseite (4b), und wobei das erste Eingriffsteil (8) und das zweite Eingriffsteil (21) sich radial zur Längsachse (L) teilweise überschneiden, wobei das erste Eingriffsteil (8) und das zweite Eingriffsteil (9) in Richtung der Längsachse (L) gegenüberliegend angeordnet sind und gegenseitig in Richtung der Längsachse (L) verschiebbar sind, sodass das erste Eingriffsteil (8) und das zweite Eingriffsteil (21) in gegenseitigen Eingriff bringbar sind, wobei das erste Eingriffsteil (8) aus einer Mehrzahl von in Umfangsrichtung (U) gegenseitig beabstandet angeordneten Eingriffsteilabschnitten (8e, 8f) mit zwischen liegenden Zwischenräumen (9) besteht , wobei die Zwischenräume (9) zwischen den Eingriffsteilabschnitten (8e,8f) einen bezüglich den Eingriffsteilabschnitten (8e, 8f) reduzierten Aussendurchmesser aufweisen, und wobei das erste Eingriffsteil (8) zumindest zwei erste und zwei zweite Eingriffsteilabschnitte (8e, 8f) umfasst, **dadurch gekennzeichnet, dass** die ersten und zweiten Eingriffsteilabschnitte (8e, 8f) in Umfangsrichtung (U) unterschiedlich lang ausgestaltet sind.

16. Sicherheitsverschluss nach Anspruch 15, **dadurch gekennzeichnet, dass** die Zwischenräume (9a) den Aussendurchmesser (D_{A}) der Aussenfläche (4d) aufweisen.

17. Sicherheitsverschluss nach Anspruch 15 oder 16, **dadurch gekennzeichnet, dass** an der Aussenfläche (4d) einzig das erste Eingriffsteil (8) angeordnet ist.

18. Sicherheitsverschluss nach Anspruch 16, **dadurch gekennzeichnet, dass** die Aussenfläche (4d) in Richtung der Längsachse (L) eine Gesamtlänge (L_{A}) aufweist, und dass die Aussenfläche (4d) im Bereich der Zwischenräume (9) entlang der Gesamtlänge (L_{A}) denselben Aussendurchmesser (D_{A}) aufweist.

19. Sicherheitsverschluss nach Anspruch 15, **dadurch gekennzeichnet, dass** der erste Eingriffsteilabschnitt (8e) sowie der zweite Eingriffsteilabschnitt (8f) in Umfangsrichtung (U) beidseitig Endabschnitte (8d) aufweisen, welche in die Aussenfläche (4d) auslaufen.

20. Sicherheitsverschluss nach einem der Ansprüche 15 bis 19, **dadurch gekennzeichnet, dass** das Betätigungsteil (20) in Umfangsrichtung (U) entlang der Innenfläche (20a) eine Innenumfangslänge (U₁) aufweist, dass das erste Eingriffsteil (8) zusammen mit den Zwischenräumen (9) in Umfangsrichtung (U) eine Aussenumfangslänge (U₂) aufweist, und dass die Innenumfangslänge (U₁) grösser oder gleich der Aussenumfangslänge (U₂) ist.

21. Sicherheitsverschluss nach einem der Ansprüche 15 bis 20, **dadurch gekennzeichnet, dass** ein Anschlagteil (22) einen gegenseitig maximal möglichen Verschiebeweg (V) von erstem Eingriffsteil (8) und zweitem Eingriffsteil (21) begrenzt.

22. Sicherheitsverschluss nach einem der Ansprüche 15 oder 21, **dadurch gekennzeichnet, dass** das erste Eingriffsteil (8) in radialer Richtung über die Aussenfläche (4d) vorsteht, dass das zweite Eingriffsteil (21) bezüglich der Innenfläche (20a) in radialer Richtung zurückversetzt ist, dass die Innenseite (20b) ein bezüglich dem zweiten Eingriffsteil (21) in Richtung der Längsachse (L) beabstandetes, zur Längsachse (L) hin vorstehendes Anschlagteil (22) umfasst, sodass zwischen dem zweiten Eingriffsteil (21) und dem Anschlagteil (22) ein Halteabschnitt (23) ausgebildet ist, dass das erste Eingriffsteil (8) in den Halteabschnitt (23) eingreift, und entlang des Halteabschnittes (23) in Richtung der Längsachse (L) verschiebbar ist.

23. Sicherheitsverschluss nach Anspruch 22, **dadurch gekennzeichnet, dass** der Halteabschnitt (23) den maximal gegenseitig möglichen Verschiebeweg (V) von Drehverschluss (3) und Betätigungsteil (20) in Richtung der Längsachse (L) bestimmt, und dass das erste Eingriffsteil (8) und das zweite Eingriffsteil (21), abhängig von der gegenseitigen Stellung von Verschlusskappe (4) und Betätigungsteil (20) in Richtung der Längsachse (L), gegenseitig ineinander greifen oder sich gegenseitig nicht berühren.

24. Sicherheitsverschluss nach einem der Ansprüche 15 bis 23, **dadurch gekennzeichnet, dass** das erste Eingriffsteil (8) und das zweite Eingriffsteil (21) gegenseitig ausgerichtete Eingriffsflächen (8b, 8c, 21d, 21e) aufweisen, wobei die Eingriffsflächen (8b, 8c, 21d, 21e) derart ausgestaltet sind, dass beim Drehen des Betätigungsteils (20) in der einen Umfangsrichtung (U) ein Drehmoment auf die Verschlusskappe (4) übertragbar ist, das zum Öffnen der Verschlusskappe (4) genügt, und dass beim Drehen des Betätigungsteils (20) in der entgegengesetzten Umfangsrichtung (U) ein zum Öffnen der Verschlusskappe (4) unzureichendes Drehmoment übertragbar ist.

25. Sicherheitsverschluss nach Anspruch 24, **dadurch gekennzeichnet, dass** das erste Eingriffsteil (8) und das zweite Eingriffsteil (21) sägezahnförmig ausgestaltet sind, mit einer in Richtung der Längsachse (L) verlaufenden ersten Eingriffsfläche (8b, 21d) und einer zweiten, quer zur Längsachse (L) verlaufenden Eingriffsfläche (8c, 21e).

26. Sicherheitsverschluss nach einem der Ansprüche 15 bis 25, **dadurch gekennzeichnet, dass** das Betätigungsteil (20) in Verlaufsrichtung der Längsachse (L) zuerst einen Eingangsabschnitt (20c) aufweist, der durchgehend ringförmig und frei von Zwischenräumen (21b) ausgestaltet ist, und dass das Betätigungsteil (20) radial zur Längsachse (L) eine Wandstärke (W) aufweist, wobei das Betätigungsteil (20) in Richtung der Längsachse (L) im Bereich vor oder nach dem Anschlagteil (22) eine geringere Wandstärke (W) aufweist als der Eingangsabschnitt (20c).

## Claims

1. A process for manufacturing a safety closure (1) by, in a first process step, a one-piece injection molded part (2) being produced which comprises, arranged following one another in the direction of a longitudinal axis (L), a rotary closure (3) with a closure cap (4), a plurality of break-off points (11) and an actuating part (20), wherein the rotary closure (3) is connected to the actuating part (20) via the break-off points (11), wherein the closure cap (4) has an outer side (4e) comprising an outer surface (4a), which runs in a circumferential direction (U) with respect to the longitudinal axis (L) and has an outer diameter (D_{A}), and wherein the closure cap (4) also comprises a first engagement part (8) on the outer side (4e), wherein the actuating part (20) has an inner side (20b) comprising an inner surface (20a), which runs in the circumferential direction (U) with respect to the longitudinal axis (L) and has an inner diameter (D_{I}), wherein the actuating part (20) also comprises a second engagement part (21) on the inner side (20b), wherein the outer diameter (D_{A}) is smaller than or equal to the inner diameter (D_{I}), and wherein the first and the second engagement part (8, 21) partially overlap radially with respect to the longitudinal axis (L),
and by, in a second process step, a force (F) acting in the direction of the longitudinal axis (L) being exerted on the injection molded part (2) such that the closure cap (4) and the actuating part (20) are mutually displaced in the direction of the longitudinal axis (L) and the closure cap (4) is at least partially displaced into the actuating part (20), and, in the process, the first engagement part (8) is pushed in the direction of the longitudinal axis (L) completely over the second engagement part (21), **characterized in that** the actuating part (20) is elastically and ovally deformed by the first engagement part (8) during the pushing-in movement and resumes its original shape after the pushing-in movement has been completed.

2. The process as claimed in claim 1, **characterized in that** the first engagement part (8) runs in the circumferential direction (U) and protrudes over the outer surface (4d), **in that** the second engagement part (21) runs in the circumferential direction (U) and is set back in the radial direction with respect to the inner surface, **in that**, when the closure cap (4) is pushed into the actuating part (20), the first engagement part (8) lies against the inner surface (20a) of the actuating part (20) and the actuating part (20) is elastically deformed by the first engagement part (8) acting thereon until the first engagement part (8) is pushed in the direction of the longitudinal axis (L) completely over the second engagement part (21).

3. The process as claimed in claim 1 or 2, **characterized in that** the first engagement part (8) consists of a plurality of engagement part portions (8e, 8f) arranged mutually spaced apart in the circumferential direction (U), **in that**, when the closure cap (4) is pushed into the actuating part (20), the originally circularly running inner surface (20e) of the actuating part (20) is elastically deformed by the engagement part portions (8e, 8f) protruding over the outer surface (4d), and **in that**, after the first engagement part (8) is pushed in the direction of the longitudinal axis (L) completely over the second engagement part (21), the inner surface (20a) is automatically deformed back again into the circularly running inner surface (20a) .

4. The process as claimed in any one of the preceding claims, **characterized in that** the actuating part (20) has an inner circumferential length (U₁) in the circumferential direction (U) along the inner surface (20a), and **in that** said inner circumferential length (U₁) is maintained or substantially maintained even during the oval deformation.

5. An injection molded part (2) for a safety closure (1), comprising, arranged following one another in the direction of a longitudinal axis (L), a rotary closure (3) comprising a closure cap (4), a plurality of break-off points (11) and an actuating part (20), wherein the rotary closure (3) is connected to the actuating part (20) via the break-off points (11), wherein the closure cap (4) has an outer side (4e) comprising an outer surface (4d), which runs in a circumferential direction (U) with respect to the longitudinal axis (L) and has an outer diameter (D_{A}), and wherein the closure cap (4) also comprises a first engagement part (8) on the outer side (4e), which protrudes over the outer surface (4d) in a radial direction (R) with respect to the longitudinal axis (L), wherein the actuating part (20) has an inner side (20b) comprising an inner surface (20a), which runs in the circumferential direction (U) with respect to the longitudinal axis (L) and has an inner diameter (D_{I}), wherein the actuating part (20) also comprises a second engagement part (21) on the inner side (20b), wherein the outer diameter (D_{A}) is smaller than or equal to the inner diameter (D_{I}), and wherein the first and the second engagement part (8, 21) partially overlap radially with respect to the longitudinal axis (L), wherein the first engagement part (8) consists of a plurality of engagement part portions (8e, 8f) arranged mutually spaced apart in the circumferential direction (U) and having intermediate spaces (9) lying in between, wherein the intermediate spaces (9) between the engagement part portions (8e, 8f) have an outer diameter which is reduced with respect to the engagement part portions, and wherein the first engagement part (8) comprises at least two first and two second engagement part portions (8e, 8f), **characterized in that** the first and second engagement part portions (8e, 8f) have different lengths in the circumferential direction (U) .

6. The injection molded part as claimed in claim 5, **characterized in that** the intermediate spaces (9) have the outer diameter (D_{A}) of the outer surface.

7. The injection molded part as claimed in claim 5 or 6, **characterized in that** solely the first engagement part (8) is arranged on the outer surface.

8. The injection molded part as claimed in claim 7, **characterized in that** the outer surface (4d) has an overall length (LA) in the direction of the longitudinal axis (L), and **in that** the outer surface (4d) has the same outer diameter (D_{A}) along the overall length (LA) in the region of the intermediate spaces (9) .

9. The injection molded part as claimed in claim 5, **characterized in that** the first engagement part portion (8e) and the second engagement part portion (8f) have end portions on both sides in the circumferential direction (U), said end portions running out into the outer surface (4d).

10. The injection molded part as claimed in claim 5, **characterized in that** the second engagement part (21) is set back in the radial direction with respect to the inner surface (20a), and **in that** the inner side (20b) comprises a stop part (22), which is spaced apart in the direction of the longitudinal axis (L) with respect to the second engagement part (21) and protrudes toward the longitudinal axis, such that a retaining portion (23) is formed between the second engagement part (21) and the stop part (22) .

11. The injection molded part as claimed in any of claims 5 to 10, **characterized in that** the actuating part (20) has an inner circumferential length (U₁) in the circumferential direction (U) along the inner surface (20a), **in that** the first engagement part (8) together with the intermediate spaces (9) in the circumferential direction (U) has an outer circumferential length (U₂), and **in that** the inner circumferential length (U₁) is greater than or equal to the outer circumferential length (U₂).

12. The injection molded part as claimed in any of claims 5 to 11, **characterized in that** the rotary closure (3) comprises a quality assurance part (5), **in that** the quality assurance part (5) is arranged following the closure cap (4) in the direction of the longitudinal axis (L) and is connected to the closure cap (4) via points of weakness (10).

13. The injection molded part as claimed in any of claims 5 to 12, **characterized in that** the actuating part (20) in the direction of the course of the longitudinal axis (L) firstly has an input portion (20c), which is configured to be annular throughout and to be free of intermediate spaces (21b), and **in that** the actuating part (20) has a wall thickness (W) radially with respect to the longitudinal axis (L), wherein the actuating part (20) has a smaller wall thickness (W) than the input portion (20c) in the region upstream or downstream of the stop part (22) in the direction of the longitudinal axis (L).

14. A process for manufacturing a safety closure from an injection molded part (1) as claimed in any of claims 5 to 13, by a force (F) acting in the direction of the longitudinal axis (L) being exerted on the injection molded part (2) such that the closure cap (4) and the actuating part (20) are mutually displaced in the direction of the longitudinal axis (L), and the closure cap (4) is at least partially displaced into the actuating part (20) by the actuating part (20) being elastically and ovally deformed by the first engagement part (8) during the pushing-in movement, and, in the process, the first engagement part (8) being pushed in the direction of the longitudinal axis (L) completely over the second engagement part (21), and by the actuating part (20) resuming its original shape after the pushing-in movement has been completed, such that the first engagement part (8) and the second engagement part (21) are then arranged opposite each other in the direction of the longitudinal axis (L).

15. A safety closure (1) comprising a rotary closure (3) with a closure cap (4) having a longitudinal axis (L), and comprising an actuating part (20), wherein the closure cap (4) has an outer side (4s) comprising an outer surface (4d), which runs in a circumferential direction (U) with respect to the longitudinal axis (L) and has an outer diameter (D_{A}), and wherein the closure cap (4) also comprises a first engagement part (8) on the outer side (4e), which first engagement part (8) protrudes over the outer surface (4d) in a direction (R) radial with respect to the longitudinal axis (L), wherein the actuating part has an inner side comprising an inner surface, which runs in the circumferential direction (U) with respect to the longitudinal axis (L) and has an inner diameter (DI), wherein the actuating part (20) also comprises a second engagement part (21) on the inner side (20b), wherein the outer diameter (D_{A}) is smaller than or equal to the inner diameter (D_{I}), wherein the closure cap (4) and the actuating part (20) are arranged concentrically with respect to the longitudinal axis (L), wherein the closure cap (4) has an end side (4b), and wherein the actuating part (20) surrounds the closure cap (4) along the outer surfaces (4d), keeping the end side free (4b), and wherein the first engagement part (8) and the second engagement part (21) partially overlap radially with respect to the longitudinal axis (L), wherein the first engagement part (8) and the second engagement part (21) are arranged opposite each other in the direction of the longitudinal axis (L) and are mutually displaceable in the direction of the longitudinal axis (L) such that the first engagement part (8) and the second engagement part (21) can be brought into mutual engagement, wherein the first engagement part (8) comprises a plurality of engagement part portions (8e, 8f) which are arranged mutually spaced apart in the circumferential direction (U) and have intermediate spaces (9) lying in between, wherein the intermediate spaces (9) between the engagement part portions (8e, 8f) have an outer diameter which is reduced with respect to the engagement part portions and wherein the first engagement part (8) comprises at least two first and two second engagement part portions (8e, 8f), **characterized in that** the first and second engagement part portions (8e, 8f) have different lengths in the circumferential direction (U).

16. The safety closure as claimed in claim 15, **characterized in that** the intermediate spaces (9a) have the outer diameter (D_{A}) of the outer surface (4d).

17. The safety closure as claimed in claim 15 or 16, **characterized in that** solely the first engagement part (8) is arranged on the outer surface (4d).

18. The safety closure as claimed in claim 16, **characterized in that** the outer surface (4d) has an overall length (L_{A}) in the direction of the longitudinal axis (L), and **in that** the outer surface (4d) has the same outer diameter (D_{A}) along the overall length (L_{A}) in the region of the intermediate spaces (9).

19. The safety closure as claimed in claim 15, **characterized in that** the first engagement part portion (8e) and the second engagement part portion (8f) have end portions (8d) on both sides in the circumferential direction (U), said end portions (8d) running out into the outer surface (4d).

20. The safety closure as claimed in any of claims 15 to 19, **characterized in that** the actuating part (20) has an inner circumferential length (U₁) in the circumferential direction (U) along the inner surface (20a), **in that** the first engagement part (8) together with the intermediate spaces (9) in the circumferential direction (U) has an outer circumferential length (U₂), and **in that** the inner circumferential length (U₁) is greater than or equal to the outer circumferential length (U₂).

21. The safety closure as claimed in any of claims 15 to 20, **characterized in that** a stop part (22) delimits a mutually maximally possible displacement path (V) of the first engagement part (8) and second engagement part (21).

22. The safety closure as claimed in any of claims 15 or 21, **characterized in that** the first engagement part (8) protrudes over the outer surface (4d) in the radial direction, **in that** the second engagement part (21) is set back in the radial direction with respect to the inner surface (20a), **in that** the inner side (20b) comprises a stop part (22), which is spaced part in the direction of the longitudinal axis (L) with respect to the second engagement part (21) and protrudes toward the longitudinal axis (L), such that a retaining portion (23) is formed between the second engagement part (21) and the stop part (22), **in that** the first engagement part (8) engages in the retaining portion (23) and is displaceable along the retaining portion (23) in the direction of the longitudinal axis (L).

23. The safety closure as claimed in claim 22, **characterized in that** the retaining portion (23) determines the maximally mutually possible displacement path (V) of the rotary closure (3) and the actuating part (20) in the direction of the longitudinal axis (L), and **in that** the first engagement part (8) and the second engagement part (21) mutually intermesh or are not in contact with one another depending on the mutual position of the closure cap (4) and the actuating part (20) in the direction of the longitudinal axis (L).

24. The safety closure as claimed in any of claims 15 to 23, **characterized in that** the first engagement part (8) and the second engagement part (21) have mutually aligned engagement surfaces (8b, 8c, 21d, 21e), wherein the engagement surfaces (8b, 8c, 21d, 21e) are configured in such a manner that, when the actuating part (20) is rotated in the one circumferential direction (U), a torque can be transmitted to the closure cap (4), said torque being sufficient for opening the closure cap (4), and **in that**, when the actuating part (20) is rotated in the opposite circumferential direction (U), a torque which is insufficient for opening the closure cap (4) can be transmitted.

25. The safety closure as claimed in claim 24, **characterized in that** the first engagement part (8) and the second engagement part (21) are serrated, with a first engagement surface (8b, 21d) running in the direction of the longitudinal axis (L) and with a second engagement surface (8c, 21e) running transversely with respect to the longitudinal axis (L).

26. The safety closure as claimed in any of claims 15 to 25, **characterized in that** the actuating part (20) in the direction of the course of the longitudinal axis (L) firstly has an input portion (20c), which is configured to be annular throughout and to be free of intermediate spaces (21b), and **in that** the actuating part (20) has a wall thickness (W) radially with respect to the longitudinal axis (L), wherein the actuating part (20) has a smaller wall thickness (W) than the input portion (20c) in the region upstream or downstream of the stop part (22) in the direction of the longitudinal axis (L).

## Revendications

1. Procédé de fabrication d'une fermeture de sécurité (1), dans lequel, dans une première étape du procédé, on fabrique une pièce injectée (2) d'une seule pièce, qui comprend, disposés les uns à la suite des autres dans la direction d'un axe longitudinal (L), un bouchon rotatif (3) avec un capuchon de fermeture (4), une pluralité de points de séparation (11) ainsi qu'une partie d'actionnement (20), le bouchon rotatif (3) étant relié à la partie d'actionnement (20) par l'intermédiaire des points de séparation (11), le capuchon de fermeture (4) présentant un côté extérieur (4e) comprenant une surface extérieure (4d) s'étendant par rapport à l'axe longitudinal (L) dans une direction périphérique (U) et présentant un diamètre extérieur (DA), et dans lequel le capuchon de fermeture (4) comprend en outre sur le côté extérieur (4e) un premier élément d'engagement (8), la partie d'actionnement (20) présentant un côté intérieur (20b) comprenant une surface intérieure (20a) s'étendant par rapport à l'axe longitudinal (L) dans la direction circonférentielle (U) et présentant un diamètre intérieur (DI), la partie d'actionnement (20) comprenant en outre sur la face intérieure (20b) un deuxième élément d'engagement (21), le diamètre extérieur (DA) étant inférieur ou égal au diamètre intérieur (DI), et le premier et le deuxième éléments d'engagement (8, 21) se chevauchant partiellement radialement par rapport à l'axe longitudinal (L),
et en ce que, dans une deuxième étape du procédé, une force (F) agissant dans la direction de l'axe longitudinal (L) est exercée sur la Pièce injectée (2), de sorte que le capuchon de fermeture (4) et l'élément d'actionnement (20) sont déplacés l'un par rapport à l'autre dans la direction de l'axe longitudinal (L) et que le capuchon de fermeture (4) est déplacé au moins partiellement dans l'élément d'actionnement (20), et que le premier élément d'engagement (8) est alors entièrement déplacé sur le deuxième élément d'engagement (21) dans la direction de l'axe longitudinal (L),
**caractérisé en ce que**
la partie d'actionnement (20) est déformée de manière élastique et ovale par le premier élément d'engagement (8) pendant l'insertion et reprend sa forme initiale une fois l'insertion terminée.

2. Procédé selon la revendication 1, **caractérisé en ce que** le premier élément d'engagement (8) s'étend dans la direction circonférentielle (U) et dépasse de la surface extérieure (4d), **en ce que** le deuxième élément d'engagement (21) s'étend dans la direction circonférentielle (U) et est en retrait dans la direction radiale par rapport à la surface intérieure (20a), **en ce que**, lors de l'insertion du capuchon de fermeture (4) dans la partie d'actionnement (20), le premier élément d'engagement (8) s'applique contre la surface intérieure (20a) de la partie d'actionnement (20) et la partie d'actionnement (20) est déformée élastiquement par l'action du premier élément d'engagement (8) jusqu'à ce que le premier élément d'engagement (8) soit complètement enfoncé sur le deuxième élément d'engagement (21) dans la direction de l'axe longitudinal (L).

3. Procédé selon la revendication 1 ou 2, **caractérisé en ce que** le premier élément d'engagement (8) se compose d'une pluralité de sections d'élément d'engagement (8e, 8f) disposées à distance les unes des autres dans la direction périphérique (U), **en ce que**, lors de l'insertion du capuchon de fermeture (4) dans l'élément d'actionnement (20), la surface intérieure (20a) de l'élément d'actionnement (20), qui s'étend à l'origine de manière circulaire, est traversée par les section d'élément d'engagement (8e, 8f) est déformée élastiquement, et **en ce que**, après que le premier élément d'engagement (8) a été complètement poussé sur le deuxième élément d'engagement (21) dans la direction de l'axe longitudinal (L), la surface intérieure (20a) est automatiquement déformée à nouveau dans la surface intérieure (20a) s'étendant de manière circulaire.

4. Procédé selon l'une quelconque des revendications précédentes, **caractérisé en ce que** la partie d'actionnement (20) présente une longueur périphérique interne (U1) dans la direction circonférentielle (U) le long de la surface interne (20a), et **en ce que** cette longueur périphérique interne (U1) est également maintenue ou sensiblement maintenue pendant la déformation ovale.

5. Pièce injectée (2) pour une fermeture de sécurité (1) comprenant, disposés successivement dans la direction d'un axe longitudinal (L), un bouchon rotatif (3) comprenant un capuchon de fermeture (4), une pluralité de points de séparation (11) ainsi qu'un élément d'actionnement (20), le bouchon rotatif (3) étant relié à la partie d'actionnement (20) par l'intermédiaire des points de séparation (11), le capuchon de fermeture (4) présentant un côté extérieur (4e) entourant une surface extérieure (4d) s'étendant dans une direction périphérique (U) par rapport à l'axe longitudinal (L) et ayant un diamètre extérieur (DA), et le capuchon de fermeture (4) entourant en outre sur le côté extérieur (4e) un premier élément d'engagement (8) qui fait saillie dans la direction (R) radiale par rapport à l'axe longitudinal (L) au-delà de la surface extérieure (4d), l'élément d'actionnement (20) présentant un côté intérieur (20b) comprenant une surface intérieure (20a) s'étendant par rapport à l'axe longitudinal (L) dans la direction circonférentielle (U) et présentant un diamètre intérieur (DI), l'élément d'actionnement (20) comprenant en outre sur le côté intérieur (20b) un deuxième élément d'engagement (21), le diamètre extérieur (DA) étant inférieur ou égal au diamètre intérieur (DI), et le premier et le deuxième élément d'engagement (8, 21) se recoupant partiellement radialement par rapport à l'axe longitudinal (L), le premier élément d'engagement (8) étant constitué d'une pluralité de sections d'élément d'engagement (8e, 8f) avec des espaces intermédiaires (9) situés entre elles, les espaces intermédiaires (9) entre les sections d'élément d'engagement (8e, 8f) présentant un diamètre extérieur réduit par rapport aux sections d'élément d'engagement (8e, 8f), et le premier élément d'engagement (8) comprenant au moins deux premières et deux deuxièmes sections d'élément d'engagement (8e, 8f), **caractérisé en ce que** les premières et deuxièmes sections d'élément d'engagement (8e, 8f) ont une longueur différente dans la direction périphérique (U).

6. Pièce injectée selon la revendication 5, **caractérisée en ce que** les interstices
espaces intermédiaires (9) présentent le diamètre extérieur (DA) de la surface extérieure (4d).

7. Pièce injectée selon la revendication 5 ou 6, **caractérisée en ce que** seul le premier élément d'engagement (8) est disposé sur la surface extérieure (4d).

8. Pièce injectée selon la revendication 7, **caractérisée en ce que** la surface extérieure (4d) présente une longueur totale (LA) dans la direction de l'axe longitudinal (L), et **en ce que** la surface extérieure (4d) présente le même diamètre extérieur (DA) dans la zone des espaces intermédiaires (9) le long de la longueur totale (LA).

9. Pièce injectée selon la revendication 5, **caractérisée en ce que** la première section d'élément d'engagement (8e) ainsi que la deuxième section d'élément d'engagement (8f) présentent des sections d'extrémité (8d) des deux côtés dans la direction périphérique (U), qui se terminent dans la surface extérieure (4d).

10. Pièce injectée selon la revendication 5, **caractérisée en ce que** le deuxième élément d'engagement (21) est en retrait par rapport à la surface interne (20a) dans la direction radiale, et **en ce que** la surface interne (20b) comprend un élément de butée (22) espacé par rapport au deuxième élément d'engagement (21) dans la direction de l'axe longitudinal (L) et faisant saillie vers l'axe longitudinal (L), de sorte qu'une section de retenue (23) est formée entre le deuxième élément d'engagement (21) et l'élément de butée (22).

11. Pièce injectée selon l'une quelconque des revendications 5 à 10, **caractérisée en ce que**
**caractérisé en ce que** la partie d'actionnement (20) présente une longueur périphérique intérieure (U1) dans la direction périphérique (U) le long de la surface intérieure (20a), **en ce que** la première partie d'engagement (8) présente une longueur périphérique extérieure (U2) conjointement avec les espaces intermédiaires (9) dans la direction périphérique (U), et **en ce que** la longueur périphérique intérieure (U1) est supérieure ou égale à la longueur périphérique extérieure (U2).

12. Pièce injectée selon l'une des revendications 5 à 11, **caractérisée en ce que** le bouchon rotatif (3) comprend une pièce d'assurance qualité (5), **en ce que** la pièce d'assurance qualité (5) est disposée en aval du bouchon (4) dans la direction de l'axe longitudinal (L) et est reliée au bouchon (4) par des points faibles (10).

13. Pièce injectée selon l'une des revendications 10 à 12, **caractérisée en ce que** la partie d'actionnement (20) présente d'abord, dans la direction de l'axe longitudinal (L), une section d'entrée (20c) qui est de forme annulaire continue et exempte d'espaces intermédiaires (21b), et **en ce que** la partie d'actionnement (20) présente une épaisseur de paroi (W) radialement par rapport à l'axe longitudinal (L), la partie d'actionnement (20) présentant, dans la direction de l'axe longitudinal (L), dans la zone située avant ou après la partie de butée (22), une épaisseur de paroi (W) plus faible que la section d'entrée (20c).

14. Procédé de fabrication d'une fermeture de sécurité (1) à partir d'une pièce injectée (2) selon l'une des revendications 5 à 13, en exerçant une force (F) agissant dans la direction de l'axe longitudinal (L) sur la pièce injectée (2), de sorte que le capuchon de fermeture (4) et la partie d'actionnement (20) sont déplacés mutuellement dans la direction de l'axe longitudinal (L) et que le capuchon de fermeture (4) est déplacé au moins partiellement dans la partie d'actionnement (20), en ce que la partie d'actionnement (20) est déformée de manière élastique et ovale par le premier élément d'engagement (8) pendant l'insertion, et en ce que le premier élément d'engagement (8) est alors complètement poussé sur le deuxième élément d'engagement (21) dans la direction de l'axe longitudinal (L), et en ce que la partie d'actionnement (20) reprend la forme initiale une fois l'insertion effectuée, de sorte que le premier élément d'engagement (8) et le deuxième élément d'engagement (21) sont ensuite disposés en face l'un de l'autre dans la direction de l'axe longitudinal (L).

15. Fermeture de sécurité (1) comprenant un bouchon rotatif (3) avec un capuchon de fermeture (4) présentant un axe longitudinal (L), ainsi qu'une partie d'actionnement (20), le capuchon de fermeture (4) présentant un côté extérieur (4e) comprenant une surface extérieure (4d) s'étendant dans une direction circonférentielle (U) par rapport à l'axe longitudinal (L) et présentant un diamètre extérieur (DA), et dans lequel le capuchon de fermeture (4) comprend en outre, sur le côté extérieur (4e), un premier élément d'engagement (8) qui fait saillie au-delà de la surface extérieure (4d) dans la direction radiale (R) par rapport à l'axe longitudinal (L), la partie d'actionnement (20) présentant un côté intérieur (20b) comprenant une surface intérieure (20a) s'étendant dans la direction circonférentielle (U) par rapport à l'axe longitudinal (L) et présentant un diamètre intérieur (DI), la partie d'actionnement (20) comprenant en outre un deuxième élément d'engagement (21) sur le côté intérieur (20b), le diamètre extérieur (DA) étant inférieur ou égal au diamètre intérieur (DI), le capuchon de fermeture (4) et la partie d'actionnement (20) étant disposés de manière concentrique par rapport à l'axe longitudinal (L), le capuchon de fermeture (4) présentant une face frontale (4b), et dans lequel la partie d'actionnement (20) entoure le capuchon de fermeture (4) le long des surfaces extérieures (4d) en laissant libre la face frontale (4b), et dans lequel le premier élément d'engagement (8) et le deuxième élément d'engagement (21) se chevauchent partiellement radialement par rapport à l'axe longitudinal (L), le premier élément d'engagement (8) et le deuxième élément d'engagement (9) étant disposés en face l'un de l'autre dans la direction de l'axe longitudinal (L) et pouvant être déplacés l'un par rapport à l'autre dans la direction de l'axe longitudinal (L), de sorte que le premier élément d'engagement (8) et le deuxième élément d'engagement (21) peuvent être amenés en engagement mutuel, la première pièce d'engagement (8) étant constituée d'une pluralité de sections de pièce d'engagement (8e, 8f) disposées à distance les unes des autres dans la direction circonférentielle (U) avec des espaces intermédiaires (9) situés entre elles, les espaces intermédiaires (9) entre les sections de pièce d'engagement (8e, 8f) ayant un diamètre inférieur à celui des sections de pièce d'engagement (8e, 8f), 8f), et le premier élément d'engagement (8) comprenant au moins deux premières et deux secondes sections d'élément d'engagement (8e, 8f), **caractérisé en ce que** les premières et secondes sections d'élément d'engagement (8e, 8f) sont de longueurs différentes dans la direction circonférentielle (U) .

16. Fermeture de sécurité selon la revendication 15, **caractérisée en ce que** les espaces intermédiaires (9a) présentent le diamètre extérieur (DA) de la surface extérieure (4d).

17. Fermeture de sécurité selon la revendication 15 ou 16, **caractérisée en ce que** seul le premier élément d'engagement (8) est disposé sur la surface extérieure (4d).

18. Fermeture de sécurité selon la revendication 16, **caractérisée en ce que** la surface extérieure (4d) présente une longueur totale (LA) dans la direction de l'axe longitudinal (L), et **en ce que** la surface extérieure (4d) présente le même diamètre extérieur (DA) dans la zone des espaces intermédiaires (9) le long de la longueur totale (LA).

19. Fermeture de sécurité selon la revendication 15, **caractérisée en ce que** la première section d'élément d'engagement (8e) ainsi que la deuxième section d'élément d'engagement (8f) présentent des deux côtés, dans la direction périphérique (U), des sections d'extrémité (8d) qui se terminent dans la surface extérieure (4d).

20. Fermeture de sécurité selon l'une des revendications 15 à 19, **caractérisée en ce que** la partie d'actionnement (20) présente une longueur périphérique intérieure (U1) dans la direction périphérique (U) le long de la surface intérieure (20a), **en ce que** la première partie d'engagement (8) présente une longueur périphérique extérieure (U2) conjointement avec les espaces intermédiaires (9) dans la direction périphérique (U), et **en ce que** la longueur périphérique intérieure (U1) est supérieure ou égale à la longueur périphérique extérieure (U2).

21. Fermeture de sécurité selon l'une des revendications 15 à 20, **caractérisée en ce qu'**un élément de butée (22) limite une course de déplacement (V) maximale possible entre le premier élément d'engagement (8) et le deuxième élément d'engagement (21).

22. Fermeture de sécurité selon l'une des revendications 15 ou 21, **caractérisée en ce que** le premier élément d'engagement (8) fait saillie radialement au-delà de la surface extérieure (4d), **en ce que** le deuxième élément d'engagement (21) est en retrait radialement par rapport à la surface intérieure (20a), **en ce que** la face intérieure (20b) présente un angle d'inclinaison par rapport au deuxième élément d'engagement (21) espacé dans la direction de l'axe longitudinal (L), l'axe longitudinal (L), de sorte qu'une section de retenue (23) est formée entre le deuxième élément d'engagement (21) et l'élément de butée (22), que le premier élément d'engagement (8) s'engage dans la section de retenue (23) et peut être déplacé le long de la section de retenue (23) dans la direction de l'axe longitudinal (L).

23. Fermeture de sécurité selon la revendication 22, **caractérisée en ce que** la section de retenue (23) détermine la course de déplacement (V) maximale mutuellement possible du bouchon rotatif (3) et de la partie d'actionnement (20) dans la direction de l'axe longitudinal (L), et **en ce que** le premier élément d'engagement (8) et le deuxième élément d'engagement (21), en fonction de la position mutuelle du capuchon de fermeture (4) et de la partie d'actionnement (20) dans la direction de l'axe longitudinal (L), s'engagent mutuellement l'un dans l'autre ou ne se touchent pas mutuellement.

24. Fermeture de sécurité selon l'une des revendications 15 à 23, **caractérisée en ce que** le premier élément d'engagement (8) et le deuxième élément d'engagement (21) présentent des surfaces d'engagement (8b, 8c, 21d, 21e) mutuellement alignées, les surfaces d'engagement (8b, 8c, 21d, 21e) étant configurées de telle sorte, que lors de la rotation de la partie d'actionnement (20) dans l'une des directions circonférentielles (U), un couple de rotation suffisant pour ouvrir le capuchon de fermeture (4) peut être transmis au capuchon de fermeture (4), et que lors de la rotation de la partie d'actionnement (20) dans la direction circonférentielle opposée (U), un couple de rotation insuffisant pour ouvrir le capuchon de fermeture (4) peut être transmis.

25. Fermeture de sécurité selon la revendication 24, **caractérisée en ce que** le premier élément d'engagement (8) et le deuxième élément d'engagement (21) sont en forme de dents de scie, avec une première surface d'engagement (8b, 21d) s'étendant dans la direction de l'axe longitudinal (L) et une deuxième surface d'engagement (8c, 21e) s'étendant transversalement à l'axe longitudinal (L).

26. Fermeture de sécurité selon l'une des revendications 15 à 25, **caractérisée en ce que** la partie d'actionnement (20) présente d'abord, dans la direction d'extension de l'axe longitudinal (L), une section d'entrée (20c) qui est de forme annulaire continue et exempte d'espaces intermédiaires (21b), et **en ce que** la partie d'actionnement (20) présente une épaisseur de paroi (W) radialement par rapport à l'axe longitudinal (L), la partie d'actionnement (20) présentant, dans la direction de l'axe longitudinal (L), dans la zone située avant ou après la partie de butée (22), une épaisseur de paroi (W) inférieure à celle de la section d'entrée (20c) .
